# EUROPÄISCHE PATENTSCHRIFT

(11) **EP 0 524 145 B1**
(45) Veröffentlichungstag und Bekanntmachung des Hinweises auf die Patenterteilung: **27.01.1999**
(21) Anmeldenummer: 92810524.6
(22) Anmeldetag: 09.07.1992
(51) Int. Cl.: C07F 9/165, C10M 137/10

(54) **Multifunktionelle Schmierstoff-Additive**
Multifunctional additives for lubricants
Additifs multifonctionnels pour lubrifiants

(30) Priorität: 17.07.1991 CH 2121/91
(43) Veröffentlichungstag der Anmeldung: 20.01.1993
(73) Patentinhaber: Ciba Specialty Chemicals Holding Inc., 4057 Basel (CH)
(72) Erfinder: Camenzind, Hugo, Dr., CH-3014 Bern (CH); Hutchings, Miles, Dr., CH-4057 Basel (CH); Gröninger, Kay Stephan, W-6102 Pfungstadt (DE)

(56) Entgegenhaltungen:
- US-A- 3 591 475
- US-A- 4 834 893
- US-A- 5 019 282

## Beschreibung

Gegenstand der Erfindung sind neue Umsetzungsprodukte von S-(2-Hydroxy-3-S-alkyl)propyl-O,O-dialkylestern der Mono- oder Dithiophosphorsäure mit cyclischen Anhydriden, deren Verwendung als Mehrzweckadditive, insbesondere als Korrosionsschutz-, Hochdruck- und Verschleißschutzadditive und Antioxidantien, in Schmierstoffen, Hydraulik- oder Metallbearbeitungsflüssigkeiten, sowie Zusammensetzungen, die mindestens eine dieser Verbindungen enthalten.

Bei der typischen Anwendung sind Schmierstoffe, Hydraulik- und Metallbearbeitungsflüssigkeiten in dauerndem Kontakt zur Oberfläche metallischer Werkstoffe hohen Temperaturen und dem Einfluß von Luftsauerstoff und Feuchtigkeit ausgesetzt. Längerer Gebrauch führt daher zu oxidativem Abbau, der durch den Kontakt mit Metall katalytisch beschleunigt werden kann. Vielfach führt dies zu einer Zunahme von Acidität und Viskosität der Flüssigkeit, so daß Korrosion der Werkstoffoberfläche gefördert und die allgemeinen Gebrauchseigenschaften verschlechtert werden.

Es ist bekannt, den in Schmiersystemen verwendeten Ölen Additive zuzusetzen. Von großer Bedeutung sind z.B. Additive, die den oxidativen Abbau der Schmierstoffe unterbinden, solche, die bewegte Metallteile vor Verschleiß schützen, Additive, die über Hochdruckschutzwirkung verfügen bezw. die als Korrosions- oder als Rostschutzmittel wirken. Die verschiedenen Additiv-Typen behindern sich jedoch in vielen Fällen gegenseitig in ihrer Wirkung; so setzen z.B. viele Korrosionsinhibitoren die Wirkung der Hochdruck-Additive herab.

Dieser Antagonismus kann durch den Einsatz eines multifunktionellen Additivs überwunden werden. Einige Verbindungsklassen sind bereits beschrieben, die in der Lage sind, mehrere der erwünschten Wirkungen zu erzielen; beispielsweise beschreibt EP-A 398 843 Triazinverbindungen, die sowohl korrosions- wie auch verschleißhemmende Wirkung zeigen;
in US-A 2 836 564 sind neue Reaktionsprodukte von alpha-halogenierten aliphatischen Monocarbonsäuren und 2,5-Dimercapto-1,3,4-thiadiazol sowie deren Verwendung als Korrosions- und Rostschutzmittel beschrieben; die Verwendbarkeit der Reaktionsprodukte von alpha-halogenierten Halbestern oder Amiden der Brenztraubensäure und Thiazol-dimercaptiden als multifunktionelle Additive mit Schutzwirkung gegen Hochdruck, Verschleiß, Oxidation und Korrosion wird in EP-A 223 916 genannt;
in EP-A 291 236 wird die Verwendbarkeit von Carbonsäurederivaten, die über eine alphaständige Disulfidbrücke mit einem aliphatischen Rest verbunden sind, als Additive mit Korrosions- und Verschleißschutzfunktion erwähnt;
in EP-A 166 696 werden u.a Alkyl-thiaglycidyl-thiophosphate als Zusätze zu Schmierstoffen mit oxidations- und korrosionsverhindernder Wirkung sowie zur Verbesserung der Hochdruck- und Antiverschleißeigenschaften vorgeschlagen;
US-A 4 834 893 offenbart die Verwendbarkeit u.a. einiger von Dithiophosphaten abgeleiteter Halbester von Anhydriden, wie z.B. des Mono-[(O,O-di-2-ethylhexyl--S-2-hydroxypropyl)phosphorodithioat]dodecenylbernsteinsäureesters und dessen Metallsalzen, besonders des Li- und Cu-Salzes, als Zusätze zu Schmierstoffen und flüssigen Treibstoffen. Die Verbindungen besitzen eine Wirkung als Antioxidantien , Verschleiß- und Rostschutzmittel sowie eine potentielle Wirkung als Korrosionsinhibitoren. Ester, Amide und Aminsalze solcher Verbindungen werden in US-A-5,019,282 beschrieben.

Gegenstand der Erfindung sind neue Verbindungen, die mehrere der oben genannten Eigenschaften aufweisen, was sie zu besonders geeigneten Mehrzweckadditiven macht. Die Verbindungen weisen neben der Wirkung als Verschleiß- und Korrosionsschutzmittel und Antioxidanswirkung auch Eigenschaften auf, die sie als Additive im Hochdruckschutz verwendbar machen. Die Integration von Verschleißschutz, Korrosionsschutz und Hochdruckschutz in einem Additiv ist dabei besonders überraschend.

Die Erfindung betrifft Verbindungen der Formel (I) 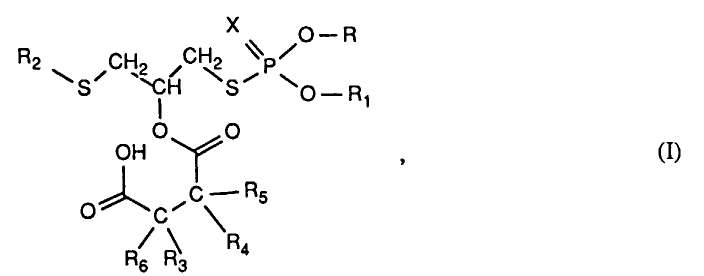 worin X Schwefel oder Sauerstoff,
R und R₁ unabhängig voneinander C₃-C₃₀Alkyl,
R₂ C₄-C₁₈Alkyl,
R₃, R₄, R₅ und R₆ unabhängig voneinander H, C₁-C₂₀Alkyl, C₃-C₂₀Alkenyl, Benzyl, Phenyl oder mit C₁-C₁₂Alkyl substituiertes Phenyl bedeuten, wobei R₅ und R₆ zusammen auch die Bedeutung einer direkten Bindung haben können;
oder R₃ und R₄ zusammen Trimethylen, Tetramethylen, 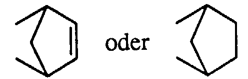 bedeuten und R₅ und R₆ die Bedeutung von H oder zusammen einer direkten Bindung haben; oder R₃ und R₆ zusammen eine Gruppe =CH₂ darstellen und R₄ und R₅ die Bedeutung H haben; oder R₄ und R₅ zusammen eine Gruppe =CH₂ darstellen und R₃ und R₆ die Bedeutung H haben;
oder R₃, R₄, R₅ und R₆ zusammen 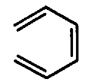 bedeuten; sowie Salze dieser Verbindungen.

Der beim Symbol C im Index genannte Zahlenbereich bezieht sich dabei auf die Zahl der möglichen C-Atome.

Stellen in obigen Formeln R, R₁, R₂, R₃, R₄, R₅ und R₆ Alkyl dar, so handelt es sich dabei um verzweigte oder unverzweigte Reste. Sie bedeuten innerhalb der oben angegebenen Definition als Alkyl beispielsweise Methyl, Ethyl, Propyl, Isopropyl, n-Butyl, sec-Butyl, Isobutyl, t-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl, Docosyl, Pentakosyl oder Triakontyl.
Bei R₃, R₄, R₅ und R₆ in der Bedeutung C₃-C₂₀Alkenyl kann es sich ebenfalls um verzweigte und unverzweigte Reste handeln. Diese Bedeutung umfaßt u.a. Propenyl, Isopropenyl, 2-Butenyl, 3-Butenyl, Isobutenyl, n-Penta-2,4-dienyl, 3-Methyl-but-2-enyl, n-Oct-2-enyl, n-Dec-2-enyl, n-Dodec-2-enyl, iso-Dodecenyl, n-Octadec-2-enyl, n-Octadec-4-enyl.
Die Bedeutung von R₃, R₄, R₅ und R₆ als mit C₁-C₁₂Alkyl substituiertes Phenyl umfaßt beispielsweise Methylphenyl, Dimethylphenyl, Trimethylphenyl, Ethylphenyl, Diethylphenyl, Isopropylphenyl, tert.-Butylphenyl, Di-tert.-butylphenyl, Methyl-di-t-butylphenyl, 1,1,3,3-Tetramethylbutylphenyl und 1,1,3,3,5,5-Hexamethylhexylphenyl. Die Zahl der Alkylgruppen im Alkylphenylrest beträgt insbesondere 1-3, z.B. 1 oder 2, vor allem 1.

Bevorzugt sind Verbindungen der Formel (I), in denen R und R₁ unabhängig voneinander C₃-C₁₈Alkyl, besonders C₃-C₁₂Alkyl bedeuten, zum Beispiel Propyl, Isopropyl, 2-Methylpropyl, sec-Butyl, n-Butyl, n-Pentyl, 2-Methylbutyl, 3-Methylbutyl, n-Hexyl, 2-Ethylhexyl, n-Octyl, Isooctyl, n-Dodecyl; von besonderem Interesse sind solche Verbindungen, in denen R und R₁ gleich sind und Isopropyl oder 2-Methylpropyl bedeuten.

R₂ hat bevorzugt die Bedeutung C₄-C₁₂Alkyl, besonders verzweigtes C₄-C₁₂Alkyl, z.B. tertiär-Butyl, Neopentyl, 1-Methylheptyl, 1,1,3,3-Tetramethylpentyl, tertiär-Nonyl, 1,1,3,3,5,5-Hexamethylhexyl, tertiär-Dodecyl, vor allem tertiär-Nonyl und tertiär-Dodecyl.
Unter tertiär-Nonyl (abgekürzt t-Nonyl) ist das Isomerengemisch enthaltend 1,1,3,3-Tetramethylpentyl zu verstehen, wie es für das tertiär-Nonylmercaptan (Chemical Abstracts Reg. Nr. 25360-10-5) definiert ist. Entsprechend ist unter tertiär-Dodecyl (abgekürzt t-Dodecyl) das Isomerengemisch enthaltend 1,1,3,3,5,5-Hexamethylhexyl zu verstehen, wie es für tertiär-Dodecylmercaptan (Chemical Abstracts Reg. Nr. 25103-58-6) definiert ist.

Bevorzugt sind weiterhin Verbindungen, in denen einer der Substituenten R₃ oder R₄ H, C₁-C₂₀Alkyl oder C₃-C₂₀Alkenyl, der andere Wasserstoff darstellt, oder R₃ und R₄ zusammen Trimethylen, Tetramethylen, 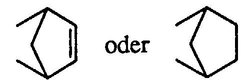 bedeuten, und
R₅ und R₆ Wasserstoff oder eine direkte Bindung bedeuten, oder R₃, R₄, R₅ und R₆ zusammen 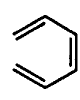 bedeuten.

Besonders bevorzugt sind Verbindungen der Formel (I), bei denen einer der Substituenten R₃ oder R₄ C₁-C₂₀Alkyl oder C₄-C₂₀Alkenyl, z.B. Methyl, Ethyl, Propyl, n-Octyl, Isooctyl, n-Oct-2-enyl, n-Nonyl, n-Dodecyl, n-Dodec-2-enyl, iso-Dodecenyl, n-C₁₈H₃₇, speziell C₈-C₁₂Alkenyl und C₈-C₁₂Alkyl, vor allem n-Oct-2-enyl und iso-Dodecenyl oder iso-Dodecyl, der andere Wasserstoff, oder R₃ und R₄ zusammen Trimethylen oder Tetramethylen, vor allem Tetramethylen, darstellen.

R₅ und R₆ haben bevorzugt die Bedeutung von Wasserstoff oder einer direkten Bindung, besonders die von Wasserstoff.

X hat bevorzugt die Bedeutung eines Schwefelatoms.

Zu den bevorzugten Verbindungen gehören Verbindungen der Formel (I), worin
R und R₁ unabhängig voneinander C₃-C₁₈Alkyl und
R₂ C₄-C₁₈Alkyl bedeuten,
einer der Substituenten R₃ oder R₄ H, C₁-C₂₀Alkyl oder C₃-C₂₀Alkenyl und der andere Wasserstoff darstellt, oder R₃ und R₄ zusammen Trimethylen, Tetramethylen, 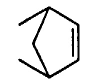 oder 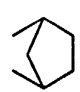 bedeuten, und
R₅ und R₆ Wasserstoff oder eine direkte Bindung bedeuten,
oder R₃, R₄, R₅ und R₆ zusammen 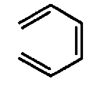 bedeuten.

Besonders bevorzugt sind Verbindungen der Formel (I), bei denen X Schwefel bedeutet,
R und R₁ unabhängig voneinander C₃-C₁₂Alkyl; R₂ C₄-C₁₂Alkyl;
einer der Substituenten R₃ oder R₄ C₁-C₂₀Alkyl oder C₄-C₂₀Alkenyl und der andere Wasserstoff darstellt; oder R₃ und R₄ zusammen Trimethylen oder Tetramethylen darstellen; und
R₅ und R₆ Wasserstoff oder eine direkte Bindung bedeuten.

Von besonderem Interesse sind Verbindungen der Formel (I), worin R und R₁ jeweils gleich sind und Isopropyl, 2-Methylpropyl, n-Butyl, n-Pentyl, 2-Methylbutyl, 3-Methylbutyl oder 2-Ethylhexyl bedeuten, R₂ tertiär-Nonyl oder -Dodecyl bedeutet, einer der Substituenten R₃ oder R₄ Oct-2-enyl, C₁₂Alkenyl oder Octadecyl, der andere Wasserstoff darstellt und
R₅ und R₆ Wasserstoff bedeuten.

Vor allem von Interesse sind Verbindungen der Formel (I), worin R und R₁ jeweils gleich sind und Isopropyl oder 2-Methylpropyl bedeuten, R₂ tertiär-Nonyl bedeutet,
einer der Substituenten R₃ oder R₄ C₁₂Alkenyl, der andere Wasserstoff darstellt und R₅ und R₆ Wasserstoff bedeuten.

Generell von besonderem Interesse sind Verbindungen der Formel (I), worin R und R₁ gleich sind.

Bevorzugt sind weiterhin solche Verbindungen der Formel (I), worin X Schwefel bedeutet.

Salze von Verbindungen der Formel (I) bilden ebenfalls einen Gegenstand dieser Erfindung. Darunter sind solche Verbindungen zu verstehen, in denen das Proton der freien Carboxylgruppe in Formel (I) durch ein Äquivalent eines Metall-Kations, z.B. eines Alkali- oder Erdalkalimetalls oder eines der Metalle Zink oder Kupfer, oder durch Ammonium oder ein- bis dreifach C₁-C₁₈-alkylsubstituiertes Ammonium ersetzt ist. Es sind auch gemischte Salze möglich.
Bei den Alkylsubstituenten des Ammonium handelt es sich bevorzugt um mindestens einen C₂-C₁₈Alkylrest und eventuell weitere, gleiche oder verschiedene C₁-C₁₈Alkylreste. Besonders bevorzugt als Substituenten des Ammonium sind C₂-C₁₈Alkyl, vor allem C₈-C₁₈Alkyl und davon insbesondere C₈Alkyl, C₁₃Alkyl und C₁₈Alkyl.
Bevorzugt unter den Metallsalzen der Verbindungen nach Formel (I) sind Lithium-, Natrium-, Kalium-, Magnesium-, Calcium- und Kupfer(II)-salze, besonders bevorzugt sind Lithium-, Magnesium- und Kupfer(II)-salze.
Von besonderem praktischem Interesse sind die Alkalimetall- sowie die mono- oder di-C₈-C₁₈-alkylsubstituierten Ammoniumsalze.

Die Erfindung betrifft weiterhin Zusammensetzungen enthaltend a) einen Schmierstoff, eine Hydraulik- oder eine Metallbearbeitungsflüssigkeit und b) eine oder mehrere Verbindungen der Formel (I). Bevorzugt sind Zusammensetzungen, in denen Komponente a) ein Schmierstoff ist. Bevorzugte Formen der Komponente b) sind dieselben wie oben beschrieben.

Die in den erfindungsgemäßen Zusammensetzungen enthaltenen Schmierstoffe, Hydraulik- und Metallbearbeitungsflüssigkeiten können sich mehr oder weniger leicht unter Einfluß von Wärme, elektromagnetischer Strahlung, mechanischer Belastung (insbesondere durch Scherkräfte) und oxidierenden Stoffen (besonders Luftsauerstoff) zersetzen. So entstandene Zersetzungsprodukte tragen ebenso wie vorhandenes Wasser zur Korrosion der damit in Berührung kommenden Metalloberflächen bei.

Dem Schutz vor solchen Einflüssen dienen die Verbindungen der Formel (I), die in den erfindungsgemäßen Zusammensetzungen zweckmäßig zu 0.01 bis 10, beispielsweise zu 0.01 bis 5, vorzugsweise zu 0.03 bis 3, insbesondere zu 0.2 bis 0.7 (bei Kombination mit anderen Verschleißschutzadditiven zu 0.03 bis 0.25) Gewichtsprozent vorliegen sollen. Es kann sich dabei um eine oder mehrere dieser Verbindungen handeln. Die Prozentangaben beziehen sich dabei auf das gesamte Gewicht dieser Verbindungen, Berechnungsgrundlage ist das Gesamtgewicht der Komponente a) und eventueller weiterer Komponenten ohne die Komponente b) (Verbindungen der Formel (I)).

Die Erfindung betrifft weiterhin die Verwendung von Verbindungen der Formel (I) als Mehrzweckadditive, insbesondere in Schmierstoffen, Metallbearbeitungs- und Hydraulikflüssigkeiten. Eine solche Verwendung bedeutet auch ein Verfahren zur Verbesserung der Gebrauchseigenschaften von Schmierstoffen, Metallbearbeitungs- und Hydraulikflüssigkeiten. Die erfindungsgemäße Verwendung schließt auch den Schutz der zu schmierenden Metallteile vor mechanischer Abnutzung (Verschleißschutz) ein.

Die in Frage kommenden Schmierstoffe, Metallbearbeitungs- und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim 1982), in Schewe-Kobek, "Das Schmiermittel-Taschenbuch" (Dr. Alfred Hüthig-Verlag, Heidelberg 1974) und in "Ullmanns Enzyklopädie der technischen Chemie", Bd.13, Seiten 85-94 (Verlag Chemie, Weinheim 1977) beschrieben.

Die Schmierstoffe sind insbesondere Öle und Fette, beispielsweise basierend auf einem Mineralöl. Bevorzugt sind Öle.

Eine weitere Gruppe von Schmierstoffen, die zur Anwendung gelangen können, sind pflanzliche oder tierische Öle, Fette, Talge und Wachse oder deren Gemische untereinander oder Gemische mit den erwähnten mineralischen oder synthetischen Ölen. Pflanzliche oder tierische Öle, Fette, Talge und Wachse sind beispielsweise Palmkernöl, Palmöl, Olivenöl, Rüböl, Rapsöl, Leinöl, Erdnußöl, Sojabohnenöl, Baumwollöl. Sonnenblumenöl, Kürbiskernöl, Kokosöl, Maisöl, Rizinusöl, Baumnußöl und Mischungen davon, Fischöle, Talge von Schlachttieren, Klauenfett und Knochenöl sowie deren modifizierte, epoxidierte und sulfoxidierte Formen, beispielsweise epoxidiertes Sojabohnenöl.

Die Mineralöle basieren insbesondere auf Kohlenwasserstoffverbindungen.

Beispiele von synthetischen Schmierstoffen umfassen Schmierstoffe auf der Basis der aliphatischen oder aromatischen Carboxylester, der polymeren Ester, der Polyalkylenoxide, der Phosphorsäureester, der Poly-α-olefine oder der Silicone, eines Diesters einer zweiwertigen Säure mit einem einwertigen Alkohol, wie z.B. Dioctylsebacat oder Dinonyladipat, eines Triesters von Trimethylolpropan-tricaprylat oder Gemische davon, eines Tetraesters von Pentaerythrit mit einer einwertigen Säure oder einem Gemisch solcher Säuren, wie z.B. Pentaerythrit-tetracaprylat, oder eines komplexen Esters von einwertigen und zweiwertigen Säuren mit mehrwertigen Alkoholen, z.B. ein komplexer Ester von Trimethylolpropan mit Capryl- und Sebacinsäure, oder von einem Gemisch davon. Besonders geeignet sind neben Mineralölen z.B. Poly-α-Olefine, Schmierstoffe auf Esterbasis, Phosphate, Glycole, Polyglycole und Polyalkylenglycole, sowie deren Mischungen mit Wasser.

Metallbearbeitungsflüssigkeiten und Hydraulikflüssigkeiten können auf der Basis der gleichen Substanzen hergestellt werden wie vorstehend für die Schmiermittel beschrieben. Häufig handelt es sich dabei auch um Emulsionen solcher Substanzen in Wasser oder anderen Flüssigkeiten.

Erfindungsgemäße Schmierstoffzusammensetzungen finden Verwendung z.B. in Verbrennungsmotoren, u.a. in Kraftfahrzeugen.

Die Verbindungen gemäß Formel (I) sind gut in Schmierstoffen, Metallbearbeitungs- und Hydraulikflüssigkeiten löslich und sind deshalb als Zusätze zu diesen Stoffen besonders geeignet. Es ist besonders auf ihre überraschend gute verschleiß- und korrosionshemmende Wirkung hinzuweisen.

Daher betrifft die Erfindung auch ein Verfahren zur Verbesserung der Gebrauchseigenschaften von Schmierstoffen, Metallbearbeitungs- und Hydraulikflüssigkeiten, dadurch gekennzeichnet, daß diesen eine oder mehrere Verbindungen der Formel (I) zugesetzt werden.

Die erfindungsgemäßen Zusammensetzungen können mehrere weitere Additive wie z.B. Korrosionsschutzmittel, Rostinhibitoren, Metall-Desaktivatoren, Viskositätsindex-Verbesserer, Dispergiermittel, Antioxidantien, Stockpunkterniedriger, Hochdruck- oder Verschleißschutzzusätze enthalten, um ihre Grundeigenschaften noch weiter zu verbessern. Beispiele solcher Coadditive sind im Folgenden aufgeführt.

### Beispiele für phenolische Antioxidantien

1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Di-methyl-6-(1'-methyl-tridec-1'-yl)-phenol und Mischungen davon.
2. Alkylthiomethylphenole, z.B. 2,4-Di-octylthiomethyl-6-tert.-butylphenol, 2,4-Di-octylthiomethyl-6-methylphenol, 2,4-Di-octylthiomethyl-6-ethylphenol, 2,6-Di-dodecylthiomethyl-4-nonylphenol.
3. Hydrochinone und alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol, 2,6-Di-tert.-butyl-hydrochinon, 2,5-Di-tert.-butyl-4-hydroxyanisol, 3,5-Di-tert.-butyl-4-hydroxyanisol, 3,5-Di-tert-butyl-4-hydroxyphenyl-stearat, Bis-(3,5-di-tert.-butyl-4-hydroxyphenyl)adipat.
4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol), 4,4'-Thio-bis-(3,6-di-sec.-amylphenol), 4,4'-Bis(2,6-dimethyl-4-hydroxyphenyl)-disulfid.
5. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(a-methylbenzyl)-4-nonylphenol], 2,2'-Methylen-bis-[6-(α,α-di-methylbenzyl)-4-nonylphenol], 4,4'-Methylen-bis-(2,6-di-tert.-butylphenol), 4,4'-Methylen-bis-(6-tert.butyl-2-methylphenol), 1,1 -Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1 -Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat, 1,1-Bis-(3,5-dimethyl-2-hydroxyphenyl)-butan, 2,2-Bis-(3,5-di-tert.-butyl-4-hydroxyphenyl)-propan, 2,2-Bis-(5-tert.-butyl-4-hydroxy-2-methylphenyl)-4-n-dodecylmercapto-butan, 1,1,5,5-Tetra-(5-tert.-butyl-4-hydroxy-2-methylphenyl)-pentan.
6. O-, N- und S-Benzylverbindungen, z.B. 3,5,3',5'-Tetra-tert.-butyl-4,4'-dihydroxydibenzylether, Octadecyl-4-hydroxy-3,5-dimethylbenzyl-mercaptoacetat, Tris-(3,5-di-tert.-butyl-4-hydroxybenzyl)-amin, Bis-(4-tert.-butyl-3-hydroxy-2,6-dimethylbenzyl)-dithioterephthalat, Bis-(3,5-di-tert.-butyl-4-hydroxybenzyl)-sulfid, Isooctyl-3,5-di-tert.-butyl-4-hydroxybenzyl-mercaptoacetat.
7. Hydroxybenzylierte Malonate, z.B. Dioctadecyl-2,2-bis-(3,5-di-tert.-butyl-2-hydroxybenzyl)-malonat, Di-octadecyl-2-(3-tert.-butyl-4-hydroxy-5-methylbenzyl)-malonat, Di-dodecylmercaptoethyl-2,2-bis-(3,5-di-tert.-butyl-4-hydroxybenzyl)-malonat, Di-[4-(1,1,3,3-tetramethylbutyl)-phenyl]-2,2-bis-(3,5-di-tert.-butyl-4-hydroxybenzyl)-malonat.
8. Hydroxybenzyl-Aromaten, z.B. 1,3,5-Tris-(3,5-di-tert.-butyl-4-hydroxybenzyl)-2,4,6-trimethylbenzol, 1,4-Bis-(3,5-di-tert.-butyl-4-hydroxybenzyl)-2,3,5,6-tetramethylbenzol, 2,4,6-Tris-(3,5-di-tert.-butyl-4-hydroxybenzyl)-phenol.
9. Triazinverbindungen, z.B. 2,4-Bis-octylmercapto-6-(3,5-di-tert.-butyl-4-hydroxyanilino)-1,3,5-triazin, 2-Octylmercapto-4,6-bis-(3,5-di-tert.-butyl-4-hydroxyanilino)-1,3,5-triazin, 2-Octylmercapto-4,6-bis-(3,5-di-tert.-butyl-4-hydroxyphenoxy)-1,3,5-triazin, 2,4,6-Tris-(3,5-di-tert.-butyl-4-hydroxyphenoxy)-1,2,3-triazin, 1,3,5-Tris-(3,5-di-tert.-butyl-4-hydroxybenzyl)-isocyanurat, 1,3,5-Tris-(4-tert.-butyl-3-hydroxy-2,6-dimethylbenzyl)-isocyanurat, 2,4,6-Tris-(3,5-di-tert.-butyl-4-hydroxyphenylethyl)-1,3,5-triazin, 1,3,5-Tris-(3,5-di-tert.butyl-4-hydroxyphenylpropionyl)-hexahydro-1,3,5-triazin, 1,3,5-Tris-(3,5-dicyclohexyl-4-hydroxybenzyl)-isocyanurat.
10. Benzylphosphonate, z.B. Dimethyl-2,5-di-tert.-butyl-4-hydroxybenzylphosphonat, Diethyl-3,5-di-tert.-butyl-4-hydroxybenzylphosphonat, Dioctadecyl-3,5-di-tert.-butyl-4-hydroxybenzylphosphonat, Dioctadecyl-5-tert.-butyl-4-hydroxy-3-methylbenzylphosphonat, Ca-Salz des 3,5-Di-tert.-butyl-4-hydroxybenzyl-phosphonsäure-monoethylesters.
11. Acylaminophenole, z.B. 4-Hydroxy-laurinsäureanilid, 4-Hydroxystearinsäureanilid, N-(3,5-di-tert.butyl-4-hydroxyphenyl)-carbaminsäureoctylester.
12. Ester der β-(3,5-Di-tert.butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]-octan.
13. Ester der β-(5-tert.Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]-octan.
14. Ester der β-(3,5-Dicyclohexyl-4-hvdroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]-octan.
15. Ester der 3,5-Di-tert.-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
16. Amide der β-(3,5-Di-tert.butyl-4-hydroxyphenyl)-Propionsäure, wie z.B. N,N'-Bis-(3,5-di-tert.butyl-4-hydroxyphenylpropionyl)-hexamethylendiamin, N,N'-Bis-(3,5-di-tert.-butyl-4-hydroxyphenylpropionyl)-trimethylendiamin, N,N'-Bis-(3,5-di-tert.butyl-4-hydroxyphenylpropionyl)-hydrazin.

### Beispiele für aminische Antioxidantien:

N,N'-Di-isopropyl-p-phenylendiamin, N,N'-Di-sec-butyl-p-phenylendiamin, N,N'-Bis-(1,4-dimethyl-pentyl)-p-phenylendiamin, N,N'-Bis(1-ethyl-3-methyl-pentyl)-p-phenylendiamin, N,N'-Bis(l-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxyphenyl)-amin, 2,6-Di-tert-butyl-4-dimethylamino-methylphenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Isopropyl/Isohexyl-diphenylaminen, Gemische aus mono- und dialkylierten tert.-Butyldiphenylaminen, 2,3-Dihydro-3,3-dimethyl-4H-1,4-benzothiazin, Phenothiazin, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.

### Beispiele für weitere Antioxidantien:

Aliphatische oder aromatische Phosphite, Ester der Thiodipropionsäure oder der Thiodiessigsäure, oder Salze der Dithiocarbamid- oder Dithiophosphorsäure, 2,2,12,12-Tetramethyl-5,9-dihydroxy-3,7,11-trithiatridecan und 2,2,15,15-Tetramethyl-5,12-dihydroxy-3,7,10,14-tetrathiahexadecan.

### Beispiele für Metall-Desaktivatoren, z.B. für Kupfer, sind:

a) Benzotriazole und deren Derivate, 4- oder 5-Alkylbenztriazole (z.B. Tolutriazol) und deren Derivate, 4,5,6,7-Tetrahydrobenztriazol, 5,5'-Methylenbis-benztriazol; Mannich-Basen von Benztriazol oder Tolutriazol wie 1-[Di(2-ethylhexyl)aminomethyl)-tolutriazol und 1-[Di(2-ethylhexyl)aminomethyl)-benztriazol; Alkoxyalkylbenztriazole wie 1-(Nonyloxymethyl)-benztriazol, 1-(1-Butoxyethyl)-benztriazol und 1-(1-Cyclohexyloxybutyl)-tolutriazol.
b) 1,2,4-Triazole und deren Derivate, z.B. 3-Alkyl (oder Aryl)- 1,2,4-Triazole, Mannich-Basen von 1,2,4-Triazolen wie 1-[Di(2-ethylhexyl)aminomethyl-1,2,4-triazol; Alkoxyalkyl-1,2,4-triazole wie 1-(1-Butoxyethyl)-1,2,4-triazol; acylierte 3-Amino-1,2,4-triazole.
c) Imidazolderivate, z.B. 4,4'-Methylenbis(2-undecyl-5-methylimidazol), Bis[(N-methyl)imidazol-2-yl]carbinol-octylether.
d) Schwefelhaltige heterocyclische Verbindungen, z.B. 2-Mercaptobenzthiazol, 2,5-Di-mercapto-1,3,4-thiadiazol, 2,5-Dimercaptobenzthiadiazol und deren Derivate; 3,5-Bis[di(2-ethylhexyl)amino-methyl]-1,3,4-thiadiazolin-2-on.
e) Aminoverbindungen, z.B. Salicyliden-propylendiamin, Salicylaminoguanidin und deren Salze.

### Beispiele für Rost-Inhibitoren sind:

a) Organische Säuren, ihre Ester, Metallsalze, Aminsalze und Anhydride, z.B. Alkyl- und Alkenyl-bernsteinsäuren und deren Partialester mit Alkoholen, Diolen oder Hydroxycarbonsäuren, Partialamide von Alkyl- und Alkenylbernsteinsäuren, 4-Nonylphenoxyessigsäure, Alkoxy- und Alkoxyethoxycarbonsäuren wie Dodecyloxyessigsäure, Dodecyloxy(ethoxy)-essigsäure und deren Aminsalze, ferner N-Oleoyl-sarcosin, Sorbitan-mono-oleat, Blei-naphthenat, Alkenylbernsteinsäureanhydride, z.B. Dodecenylbernsteinsäure-anhydrid, 2-O-(Carboxymethyl)-1-O-dodecyl-3-O-methylglycerin, 2-O-(Carboxymethyl)-1-O-tetradecyl-3-O-methylglycerin bezw. deren Salze, insbesondere Na- und Triethanolaminsalze.
b) Stickstoffhaltige Verbindungen, z.B.:
   I. Primäre, sekundäre oder tertiäre aliphatische oder cycloaliphatische Amine und Amin-Salze von organischen und anorganischen Säuren, z.B. öllösliche Alkylammoniumcarboxylate, ferner 1-[N,N-bis-(2-hydroxyethyl)amino]-3-(4-nonylphenoxy)propan-2-ol.
   II. Heterocyclische Verbindungen, z.B.:
      Substituierte Imidazoline und Oxazoline, 2-Heptadecenyl-1-(2-hydroxyethyl)imidazolin.
c) Phosphorhaltige Verbindungen, z.B.:
   Aminsalze von Phosphorsäurepartialestern oder Phosphonsäurepartialestern, Zinkdialkyldithiophosphate.
d) Schwefelhaltige Verbindungen, z.B.:
   Barium-dinonylnaphthalin-sulfonate, Calciumpetroleum-sulfonate, Alkylthio-substituierte aliphatische Carbonsäuren, Ester von aliphatischen 2-Sulfocarbonsäuren und deren Salze.
e) Glycerinderivate, z.B.:
   Glycerin-monooleat, 1-(Alkylphenoxy)-3-(2-hydroxyethyl)glycerine, 1-(Alkylphenoxy)-3-(2,3-dihydroxypropyl)glycerine, 2-Carboxyalkyl-1,3-dialkylglycerine.

### Beispiele für Viskositätsindex-Verbesserer sind:

Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.

### Beispiele für Stockpunkterniedriger sind:

Polymethacrylat, alkylierte Naphthalinderivate.

### Beispiele für Dispergiermittel/Tenside sind:

Polybutenylbernsteinsäureamide oder -imide, Polybutenylphosphonsäurederivate, basische Magnesium-, Calcium-, und Bariumsulfonate und -phenolate.

### Beispiele für Verschleißschutz-Additive sind:

Schwefel und/oder Phosphor und/oder Halogen enthaltende Verbindungen, wie geschwefelte Olefine und pflanzliche Oele, Zinkdialkyldithiophosphate, alkylierte Triphenylphosphate, Tritolylphosphat, Tricresylphosphat, chlorierte Paraffine, Alkyl- und Aryldi- und tri-sulfide, Aminsalze von Mono- und Dialkylphosphaten, Aminsalze der Methylphosphonsäure, Diethanolaminomethyltolyltriazol, Di(2-ethylhexyl)aminomethyltolyltriazol, Derivate des 2,5-Dimercapto-1,3,4-thiadiazols, 3-[(Bis-isopropyloxy-phosphinothioyl)thio]-propionsäure-ethylester, Triphenylthiophosphat (Triphenylphosphorothioat), Tris(alkylphenyl)phosphorothioate und deren Gemische, (z.B. Tris(isononylphenyl)phosphorothioat), Diphenyl-monononylphenyl-phosphorothioat, Isobutylphenyl-diphenyl-phosphorothioat, Dodecylaminsalz des 3-Hydroxy-1,3-thiaphosphetan-3-oxids, Trithiophosphorsäure-5,5,5-tris[isooctylacetat (2)], Derivate von 2-Mercaptobenzthiazol wie 1-[N,N-Bis(2-ethylhexyl)aminomethyl-2-mercapto- 1H-1,3-benzthiazol, Ethoxycarbonyl-5-octyl-dithiocarbamat.

### Herstellung der Verbindungen der Formel (I)

Die Verbindungen der Formel (I) lassen sich nach an sich bekannten Methoden, z.B. durch Umsetzung von Verbindungen der Formel (II) 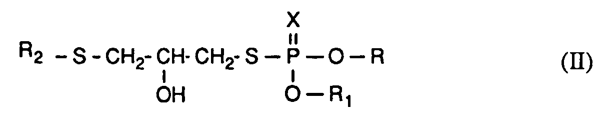 mit entsprechenden zyklischen Anhydriden der Formel (III) 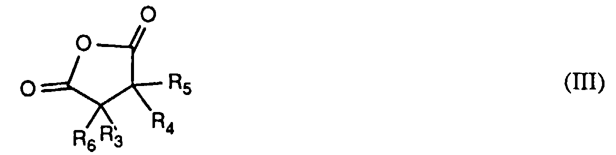 herstellen. Verbindungen der Formel (III) sind zum Teil kommerziell erhältlich und lassen sich mit bekannten Methoden synthetisieren, beschrieben z.B. in: Encyclopedia of Polymer Science and Technology, Vol.1, pp. 117 u. 118, Interscience Publishers/Wiley, New York 1964. X, R, R₁, R₂, R₃, R₄, R₅ und R₆ haben jeweils die weiter oben angegebene Bedeutung.
Die aus EP-A 166 696 bekannten Verbindungen der Formel (II) können durch Umsetzung eines entsprechenden Diesters der Thiophosphorsäure 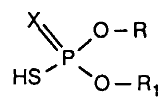 mit dem gewünschten 2,3-Epoxypropylthioether 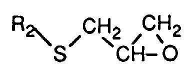 erhalten werden. Die O,O-Diester der Dithiophosphorsäure sind gemäß US-A 4 834 893 durch Umsetzung entsprechender Alkohole mit P₂S₅ darstellbar. Vergleichbare Derivate der Thiophosphorsäure (X = Sauerstoff) können wie in EP-A 125 209 beschrieben durch Reaktion entsprechender Phosphite 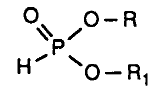 mit S/NH₃ als Ammoniumsalze erhalten werden. Die Ammoniumsalze können anschließend direkt weiter mit der Epoxyverbindung umgesetzt werden; s.DE-B 3 025 277 oder auch zunächst in die entsprechende freie Säure überführt werden.

Zur Umsetzung der Verbindungen (II) mit (III) wird zweckmäßigerweise eine ausgewählte Menge der Ausgangsverbindung der Formel (II) langsam mit einer ungefähr äquimolaren Menge des zyklischen Anhydrids versetzt. Die Ausgangsverbindung kann in einem Lösungsmittel vorgelegt werden. Geeignete Lösungsmittel sind z.B. Toluol oder Dibutylether oder Mischungen aus beiden. Die Reaktion kann in Gegenwart eines Katalysators ausgeführt werden, der mit der Ausgangsverbindung vorgelegt oder nach ca. der halben Reaktionsdauer zugefügt wird. Als Katalysatoren eignen sich z.B. 4-Toluolsulfonsäure, Methansulfonsäure oder 4-Dimethylamino-pyridin. Die Mischung wird zweckmäßig während der gesamten Reaktionsdauer auf konstanter Temperatur gehalten. Die Reaktionstemperatur kann z.B. 20 bis 150°C betragen, im allgemeinen beträgt sie 50 bis 120°C, bevorzugt 50 bis 80°C. Die Dauer der Reaktion kann 1 bis 24 Stunden betragen, sie beträgt allgemein zwischen 5 und 16 Stunden. Die Aufarbeitung kann nach üblicherweise angewendeten Methoden erfolgen, z.B. durch Waschen der organischen Phase, Trocknen und Entfernen des Lösungsmittels.

Das in der Regel (außer beim Einsatz symmetrischer Anhydride) erhaltene Isomerengemisch (R₄, R₅ ungleich R₃, R₆) kann, wenn gewünscht, mit Hilfe üblicher physikalischchemischer Verfahren getrennt werden. In der Praxis ist eine Trennung nicht notwendig. Die Isomerengemische können den Schmierstoffen, Metallbearbeitungs- und Hydraulikflüssigkeiten als solche zugesetzt werden.

Zur Herstellung der Ammoniumsalze von Verbindungen der Formel (I) setzt man zweckmäßig zu einer Lösung der gewünschten Verbindung eine stöchiometrische Menge des entsprechenden Amins, eventuell ebenfalls in einem Lösungsmittel, zu und entfernt nach Durchmischung das bezw. die Lösungsmittel durch Anlegen von Unterdruck. Als Lösungsmittel eignet sich z.B. Toluol.
Metallsalze von Verbindungen der Formel (I) können durch Umsetzung mit entsprechenden Metall-Hydroxiden erhalten werden. Die entsprechende Verbindung mit freier Säurefunktion wird zweckmäßig in einem Lösungsmittel vorgelegt, das Hydroxid zugesetzt und das Wasser anschließend durch Erhitzen der Reaktionsmischung unter Stickstoff mit dem Lösungsmittel ausgeschleppt.
Zur Herstellung des Kupfersalzes geht man bevorzugt von Cu(II)-Acetylacetonat aus, das der Lösung der Verbindung der Formel (I) zugesetzt wird. Nach Durchmischen wird das freigesetzte Acetylaceton und das verwendete Lösungsmittel in gleicher Weise entfernt wie bei der Herstellung der Ammoniumsalze. Ein geeignetes Lösungsmittel ist Toluol.

Zur weiteren Erläuterung der Erfindung folgen einige Beispiele. Darin sowie in der übrigen Beschreibung beziehen sich Teile- und Prozentangaben auf das Gewicht, sofern nichts anderes angegeben ist. Mit iso-Dodecenylbernsteinsäureanhydrid ist das technische Isomerengemisch mit verschiedenen C₁₂H₂₃-Isomeren als Substituenten des Bernsteinsäureanhydrid gemeint, beschrieben unter der CARN 25377-73-5 als 2,5-Furandione, dihydro-3-(tetrapropenyl). Bei Di-iso-tridecylamin handelt es sich um ein technisches Produkt (wie definiert unter der CARN 101012-97-9) mit zwei C₁₃H₂₇Alkylsubstituenten am Stickstoffatom.

### Beispiel 1

Zu 27.0 g O,O'-Diisopropyldithiophosphorsäure werden tropfenweise unter Rühren und unter Kühlung mit einem Wasserbad von 20-25°C 28.6 g tert-Nonyl-(2,3-epoxypropyl)thioether zugesetzt. Nach Ende der Wärmeentwicklung wird für 1 h auf 50°C erwärmt. Anschließend werden bei 25°C und 0.2 mbar flüchtige Bestandteile abgezogen. Es bleiben 54.1 g (99.8% d.Th.) eines Zwischenproduktes als farblose Flüssigkeit mit dem Brechungsindex n_{D}²⁰= 1.5116 der Formel 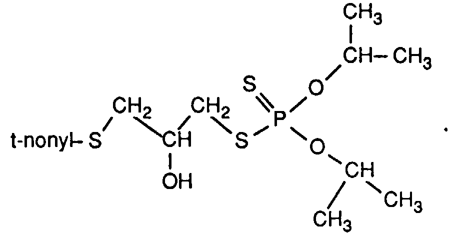 44.3 g dieses Produktes werden anschließend in 10 ml Toluol vorgelegt und tropfenweise mit 28.7 g iso-Dodecenylbernsteinsäureanhydrid versetzt. Die Mischung wird für 3 h unter ständigem Rühren auf 50°C gehalten, anschließend werden 0.1 g 4-Toluolsulfonsäure zugegeben und für weitere 3 h unter Rühren auf 50°C gehalten. Danach wird abgekühlt, mit Wasser gewaschen und die organische Phase nach Trocknen über Natriumsulfat durch Anlegen von Unterdruck vom Lösungsmittel befreit. Es bleiben 71.7 g (100.0% d. Th.) eines Gemisches der beiden bezüglich der Stellung der iso-Dodecenylgruppe isomeren Verbindungen 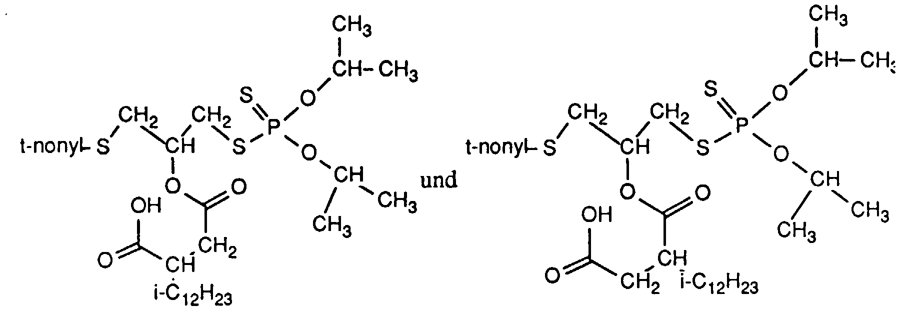 als nahezu farblose viskose Flüssigkeit mit dem Brechungsindex n_{D}²⁰= 1.5003 und IR-Absorptionsmaxima bei den Wellenzahlen 1709 cm⁻¹ und 1741 cm⁻¹ zurück.

### Beispiel 2

Dieselben Verbindungen wie in Beispiel 1 lassen sich auch durch folgende Synthesevariante erhalten:
Zu 88.0 g O,O'-Diisopropyldithiophosphorsäure in 100 ml Toluol werden tropfenweise 88.6 g tert-Nonyl-(2,3-epoxypropyl)thioether binnen ca. 30 min zugesetzt, wobei sich die Reaktionsmischung erwärmt. Anschließend wird die Reaktionstemperatur für 3 h bei 70°C gehalten, abgekühlt, 12 ml einer 5%igen Wasserstoffperoxidlösung zugegeben, 10 min auf 50°C erwärmt, die wässrige Phase abgetrennt, nacheinander mit 30 ml gesättigter Natriumhydrogencarbonatlösung und zweimal mit je 50 ml Wasser gewaschen, mit Natriumsulfat getrocknet und das Lösungsmittel durch Anlegen von Unterdruck entfernt. Es bleiben 166.2 g (94% d. Th.) des Zwischenproduktes aus Beispiel 1 als viskose farblose Flüssigkeit mit einem Brechungsindex n_{D}²⁰= 1.5132 zurück.
160 g dieses Produktes werden anschließend in 100 ml Toluol und 10 ml Dibutylether vorgelegt und mit 0.2 g 4-Toluolsulfonsäure versetzt. Tropfenweise werden dann 104 g iso-Dodecenylbernsteinsäureanhydrid zugegeben. Die Mischung wird für 5 h unter ständigem Rühren auf 70°C gehalten, anschließend wird abgekühlt, einmal mit 50 ml Wasser gewaschen und nach Trocknen über Natriumsulfat durch Anlegen von Unterdruck vom Lösungsmittel befreit. Es bleiben 244.2 g (94% d. Th.) der gemäß Beispiel 1 erhaltenen Endprodukte als viskose hellgelbe Flüssigkeit mit n_{D}²⁰= 1.5001 zurück.

### Beispiel 3

27.6 g O,O'-Diisobutyldithiophosphorsäure werden wie in Beispiel 1 beschrieben mit 26.0 g tert-Nonyl-(2,3-epoxypropyl)thioether umgesetzt. Man erhält 51.8 g (98.7% d. Th.) eines Zwischenproduktes als farblose Flüssigkeit mit dem Brechungsindex n_{D}²⁰=1.5062 der Formel 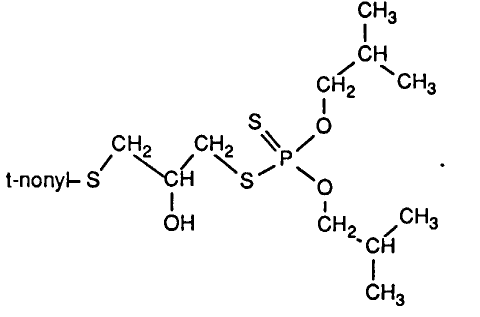 40.2 g dieses Produktes werden wie in Beispiel 1 beschrieben mit 24.5 g iso-Dodecenylbernsteinsäureanhydrid versetzt. Man erhält 62.9 g (98.9% d. Th.) eines Gemisches der beiden bezüglich der Stellung der iso-Dodecenylgruppe isomeren Verbindungen 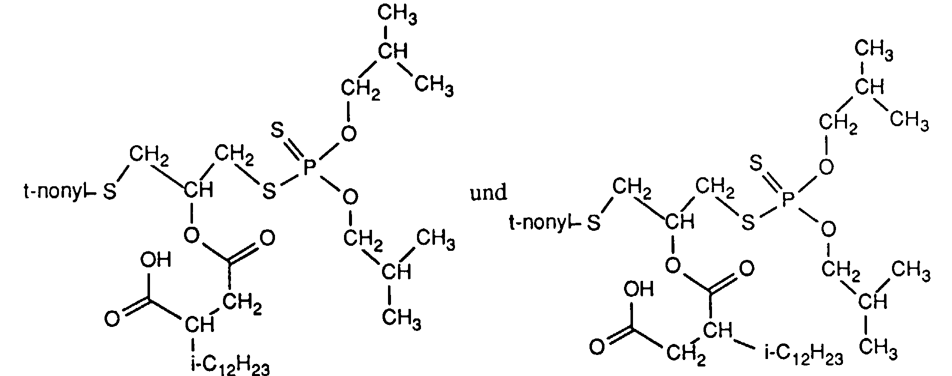 als viskose hellgelbe Flüssigkeit mit dem Brechungsindex n_{D}²⁰=1.4942.

### Beispiel 4

30.0 g O,O'-Di-n-pentyl-dithiophosphorsäure werden wie in Beispiel 1 beschrieben bei 60°C mit 25.2 g tert-Nonyl-(2,3-epoxypropyl)thioether umgesetzt. Man erhält 53.9 g (99% d. Th.) eines Zwischenproduktes als farblose Flüssigkeit der Formel 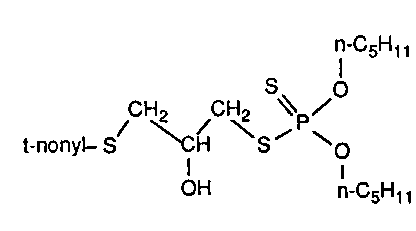 mit n_{D}²⁰=1.5051 und einer chem.

Verschiebung im ³¹P-NMR δ = 96 ppm.
45.7 g dieses Produktes werden tropfenweise mit 26.3 g iso-Dodecenylbernsteinsäureanhydrid versetzt, wobei die Temperatur ansteigt. Nach Zugabe von 0.1 g 4-Toluolsulfonsäure wird die Reaktionsmischung für 3 h bei 50°C gehalten, abgekühlt und wie in Beispiel 1 beschrieben aufgearbeitet. Man erhält 66.2 g (93% d. Th.) eines Gemisches der Isomeren 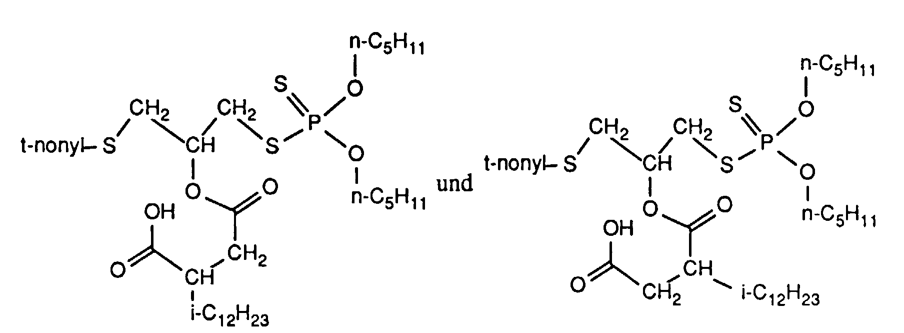 als hellgelbe Flüssigkeit mit dem Brechungsindex n_{D}²⁰= 1.4984 und einer chem. Verschiebung im ³¹P-NMR δ = 96 ppm.

### Beispiel 5

32 g O,O'-Di(2-ethylhexyl)dithiophosphorsäure werden wie in Beispiel 1 beschrieben mit 20.5 g tert-Nonyl-(2,3-epoxypropyl)thioether umgesetzt. Man erhält 49.2 g (95.5% d. Th.) eines Zwischenproduktes als farblose Flüssigkeit mit dem Brechungsindex n_{D}²⁰= 1.4919 der Formel 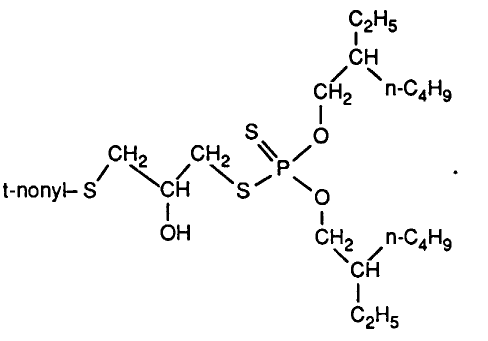 38.7 g dieses Produktes werden analog Beispiel 1 mit 19.0 g iso-Dodecenylbernsteinsäureanhydrid umgesetzt. Man erhält 56.8 g (100% d. Th.) eines Gemisches der Isomeren 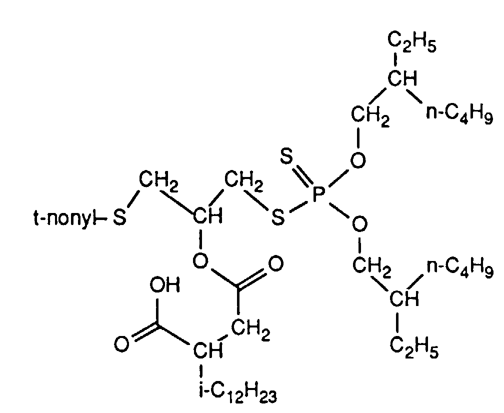 und 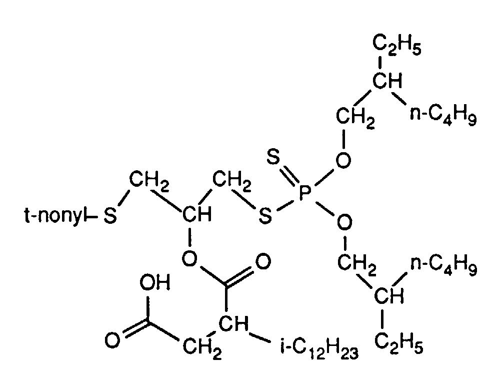 als viskose hellgelbe Flüssigkeit mit dem Brechungsindex n_{D}²⁰= 1.4907.

### Beispiel 6

Zu 39.4 g O,O'-Diisopropyl-dithiophosphorsäure werden unter Stickstoff und unter Kühlung mit einem Wasserbad tropfenweise unter Rühren 50.0 g tert-Dodecyl(2,3-epoxypropyl)thioether zugesetzt, wobei die Temperatur 20°C nicht übersteigt. Anschließend wird für 1 h auf 40°C erwärmt und darauf flüchtige Bestandteile im Vakuum abgezogen. Es bleiben 87.8 g eines Zwischenproduktes als viskose farblose Flüssigkeit mit dem Brechungsindex n_{D}²⁰= 1.5093 und einer chem. Verschiebung im ³¹P-NMR (CDCl₃) δ = 92.6 ppm der Formel 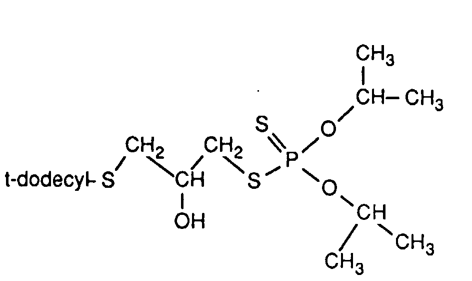 zurück.
32.5 g dieses Produktes werden anschließend in 10 ml Toluol vorgelegt, mit 0.1 g 4-Dimethylaminopyridin und tropfenweise mit 19.2 g iso-Dodecenylbernsteinsäureanhydrid versetzt. Die Mischung wird für 7 h unter ständigem Rühren auf 50°C gehalten. Danach wird abgekühlt, mit Toluol verdünnt, mit Wasser gewaschen und die organische Phase nach Trocknen über Natriumsulfat durch Anlegen von Unterdruck vom Lösungsmittel befreit. Es bleiben 51 g (100% d. Th.) eines Gemisches der Isomeren 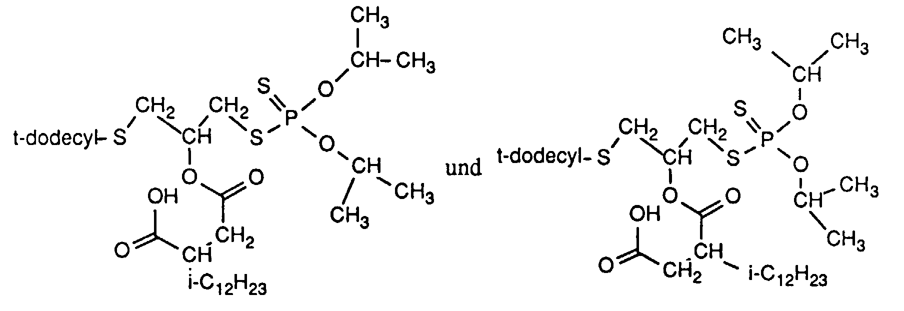 als viskose hellgelbe Flüssigkeit mit dem Brechungsindex n_{D}²⁰= 1.4997 und IR-Absorptionsmaxima bei den Wellenzahlen 1709 cm⁻¹ und 1741 cm⁻¹ ((KBr) zurück.

### Beispiel 7

Zu 46.7 g O,O'-Di-n-dodecyl-dithiophosphorsäure in 50 ml Dibutylether werden unter Stickstoff und unter Kühlung mit einem Wasserbad tropfenweise 21.7 g tert-Nonyl-(2,3-epoxypropyl)thioether zugesetzt, wobei die Temperatur 20°C nicht übersteigt. Anschließend wird für 2 h auf 60°C erwärmt. Nach Zugabe von 0.1 g 4-Toluolsulfonsäure wird die Reaktionsmischung mit 26.6 g iso-Dodecenylbernsteinsäureanhydrid versetzt. Die Mischung wird für 6 h unter ständigem Rühren auf 60°C gehalten. Danach wird abgekühlt, mit Toluol verdünnt, mit Wasser gewaschen und die organische Phase nach Trocknen über Natriumsulfat durch Anlegen von Unterdruck vom Lösungsmittel befreit. Es bleiben 80.4 g (84 % d. Th.) eines Gemisches der Isomeren 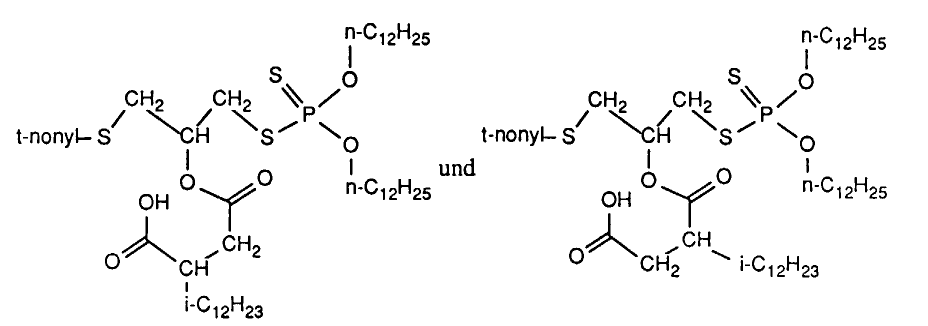 als viskose hellgelbe Flüssigkeit mit dem Brechungsindex n_{D}²⁰= 1.4865 und IR-Absorptionsmaxima bei den Wellenzahlen 1710 cm⁻¹ und 1738 cm⁻¹ (KBr) zurück.

### Beispiel 8

Zu 55.0 g O,O'-Didodecyl-dithiophosphorsäure in 50 ml Dibutylether werden unter Stickstoff und unter Kühlung mit einem Wasserbad tropfenweise 25.5 g tert-Nonyl-(2,3-epoxypropyl)thioether zugesetzt, wobei die Temperatur 20-25°C nicht übersteigt. Anschließend wird für 2 h auf 60°C erwärmt. Nach Abkühlen auf Raumtemperatur und Zugabe von 0.1 g 4-Toluolsulfonsäure und 18.0 g Tetrahydrophthalsäure-anhydrid wird die Reaktionsmischung für 5 h unter ständigem Rühren auf 60°C gehalten. Danach werden weitere 3.6 g (20% Überschuß) Tetrahydrophthalsäure-anhydrid zugesetzt und für 5 h zum Rückfluß erhitzt. Anschließend wird abgekühlt, vom unlöslichen Rückstand abfiltriert, mit Toluol verdünnt, mit Wasser gewaschen und die organische Phase nach Trocknen über Natriumsulfat durch Anlegen von Unterdruck vom Lösungsmittel befreit. Es bleiben 94.0 g (95 % d. Th.) der Verbindung 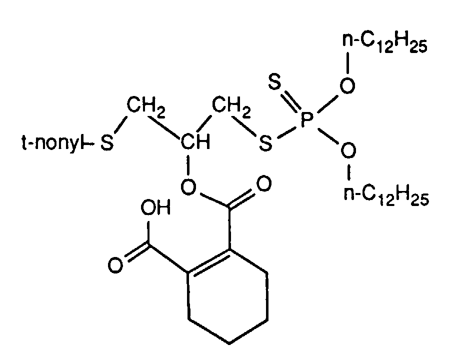 als viskose hellgelbe Flüssigkeit mit dem Brechungsindex n_{D}²⁰= 1.4930 zurück. Nach einigen Tagen wird von weiteren 5 g Niederschlag abfiltriert. Die Flüssigkeit hat jetzt einen Brechungsindex n_{D}²⁰= 1.4936 und IR-Absorptionsmaxima bei den Wellenzahlen 1709 cm⁻¹ und 1737 cm⁻¹ (KBr).

### Beispiel 9

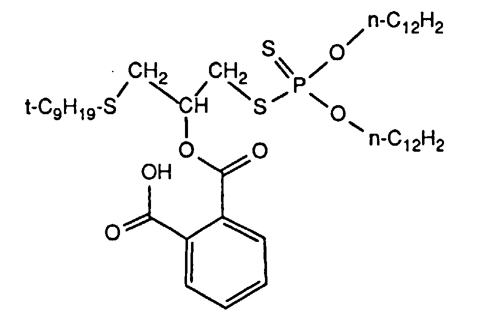

a) 31.6g tert-Nonyl-(2,3-epoxypropyl)thioether wird mit 80.0 g 85%iger O,O'-Didodecyl-dithiophosphorsäure analog Beipiel 1a umgesetzt. Man erhält 88.9g (75% d.Th) einer farblosen Flüssigkeit mit n_{D}²⁰= 1.4924.
b) 36.0 g des oben beschriebenen Produktes und 9.2 g Phthalsäureanhydrid werden in 30 ml Dibutylether gelöst. Nach Zugabe von 0.1 g 4-Dimethylaminopyridin tropft man 8.0 g Diethylamin zu. Nach 8 h Rühren bei 70°C wird abgekühlt, mit 2 n Salzsäure angesäuert und nach Verdünnen mit Toluol extrahiert. Die abgetrennte organische Phase wird zweimal mit 50 ml Wasser gewaschen, über Natriumsulfat getrocknet und im Vakuum eingeengt. Man erhält 41.6 g (95% d.Th.) einer gelben Flüssigkeit mit n_{d}²⁰= 1.5071. IR cm⁻¹)

### Beispiel 10

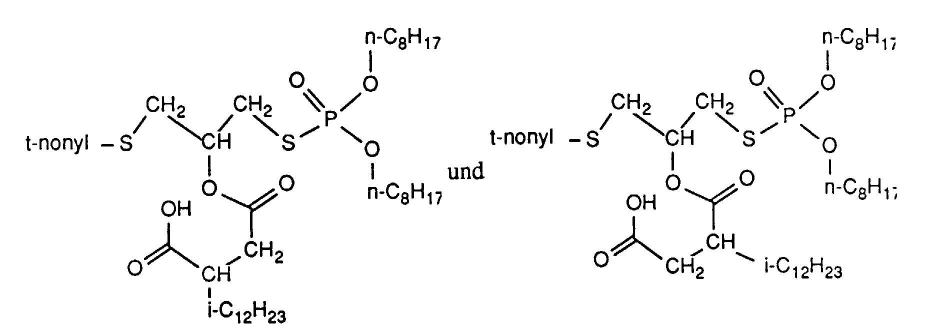

153.3 g (0.50 mol Di-n-octylphosphit und 16.0 g (0.5 mol) Schwefel werden unter einer Stickstoffatmosphäre bei 50°C gerührt und solange Ammoniakgas eingeleitet, bis die Gasaufnahme beendet ist. Dabei wird die Reaktionstemperatur bei 20 bis 25 °C gehalten. Nach weiteren 90 min Rühren bei dieser Temperatur wird zur Entfernung des überschüssigen Ammoniaks 30 min Stickstoff durch die Lösung geleitet. Nach Zugabe von 5 g Aktivkohle wird filtriert und das Filtrat im Vakuum vom Lösungsmittel befreit. Es bleiben 172.8 g (97% d.Th.) einer hellgrauen wachsartigen Masse zurück: 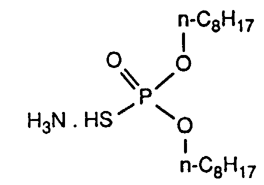 118.6 g dieses Produkts werden in 400 ml Toluol gelöst und nacheinander mit 100 ml 5 N Salzsäureund dreimal 100 ml Wasser gewaschen. Die organische Phase wird im Vakuum eingeengt, und es bleiben 110.1 g einer hellgelben Flüssigkeit zurück: 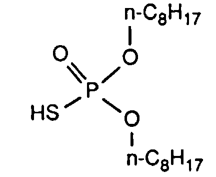 Unter Stickstoff werden 25.96 g 2,3-Epoxypropyl-tert-nonylthioether zu einer Lösung von 40.62 g der oben erhaltentnen O,O-Di-n-octyl-monothiophosphorsäure in 200 ml Toluol getropft. Nach beendeter Zugabe wird für 2 h auf 60°C erhitzt und anschließend das Lösungsmittel im Vakuum abdestilliert. Es bleiben 62.45 g eines schwachgelben Öles zurück, das nach 31P-NMR (CDCl3) zu etwa 80% aus dem gewünschten Produkt (δ = 29.8 ppm) und zu 20% aus der isomeren Verbindung (O-n-Octyl)₂P(=S)-O-CH₂CH(OH)CH₂-^{t}C₉H₁₉ (δ = - 1.6 ppm) besteht: 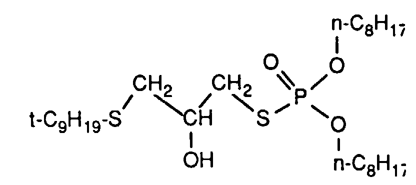 49.5 g dieses Produktes werden in 50 ml Toluol gelöst. Nach Zugabe von 0.5 g Methansulfonsäure werden 22.6 g (85 mmol) iso-Dodecenylsuccinanhydrid zugetropft und 22 h auf 70 ° erwärmt. NAch dem Abkühlen wird mit je 75 ml -wasser und 5%iger Natriumsulfatlösung gewaschen. Nach Abdestillieren des Lösungsmittels bleiben 66 g eines hellgelben viskosen Öles zurück. 6.0 g des Rohproduktes werden durch Säulenchroamtographie (Chloroform/Kieselgel) gereinigt. Als Hauptfraktion erhält man 3.6 g (60%) des Isomerengemisches. ³¹P-NMR: nur ein Resonanzsignal bei δ = 29.1 ppm.

### Beispiel 11

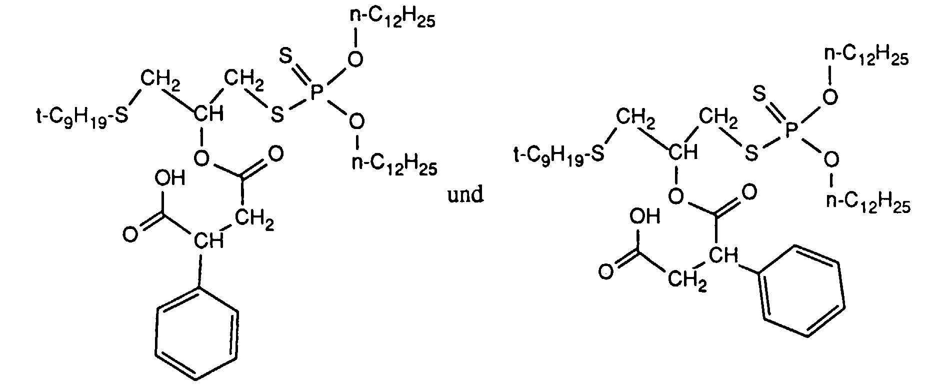

Analog Beispiel 8 wird aus 28.0 g O,O-Didodecyl-Dithiophosphorsäure und 13.0 g tert-Nonyl-(2,3-epoxypropyl)thioethers in 50 ml Dibutylether das Zwischenprodukt hergestellt. Dann werden insgesamt 16.9 g Phenylbernsteinsäureanhydrid und 3.4 g Triethylamin zugegeben. bis zum Schmelzen des Anhydrides auf ca. 100°C erhitzt und nach Zugabe von 20 ml Tetrahydrofuran 48 h bei ca. 25°C gerührt. Anschließend wird mit 50 ml 2N Salzsäure, 2 x 50 ml Wasser gewaschen, über Natriumsulfat getrocknet und im Vakuum das Lösungsmittel abdestilliert. Durch Chromatographie (Methylenchlorid/Diethylether/Petrolether 1:4:5) erhält man aus einer 10 g Probe 3.4 g des Produktes mit n_{d}²⁰ = 1.5037, IR 1712,1742 (Film auf (KBr)

### Beispiel 12

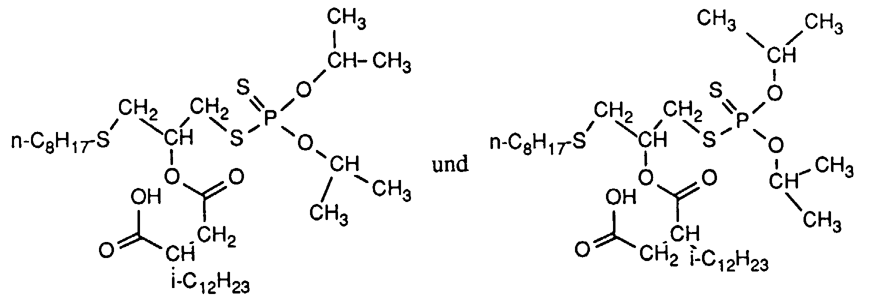

17.14 g O,O Diisopropyldithiophosphorsäure werden analog Beispiel 1 mit 16.19 g n-Octyl2,3epoxypropyl)thioether umgesetzt. Man erhält 32. 6 (80%) des Zwischenproduktes 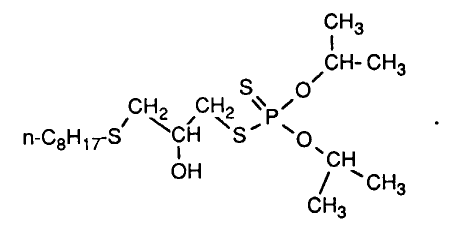 20.83 g dieses Produktes werden in 30 ml Toluol mit 12.65 g Isododecylbernsteinsäureanhydrid 8h auf 80°C erhitzt. Anschließend wird zur Vervollständigung der Reaktion 30 ml Dibutylether und 3.0 g Diazabicyclooctan zugegeben und 48 h bei 25°C gerührt. Dann wird mit Toluol verdünnt und nacheinander mit verdünnter Salzsäure, 2 x Wasser und Natriumsulfatlösung gewaschen, über Natriumsulfat getrocknet und das Lösungsmittel im Vakuum abdestilliert. Es bleiben 31.5 g (94% d.Th) einer schwachgelben viskosen Flüssigkeit zurück.
IR 1711, 1740 cm⁻¹

### Beispiel 13

Zu 20.6 g O,O'-Di-(2-ethylhexyl)-dithiophosphorsäure in 100 ml Toluol werden tropfenweise unter ständigem Rühren 20.6 g tert-Dodecyl-(2,3-epoxypropyl)thioether zugesetzt. Anschließend wird für 5 h auf 60°C erwärmt. Nach Zugabe von 6.7 g Methylbernsteinsäureanhydrid, 80 ml Dibutylether und 0.2 g 4-Toluolsulfonsäure wird die Reaktionsmischung für 5 h auf 120°C gehalten. Danach wird abgekühlt, mit 100 ml Wasser gewaschen und die organische Phase nach Trocknen über Natriumsulfat durch Anlegen von Unterdruck vom Lösungsmittel befreit. Man erhält 38.0 g (90 % d. Th.) eines Gemisches der Verbindungen 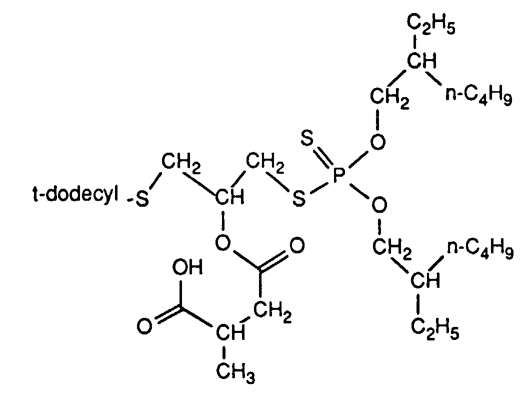 und 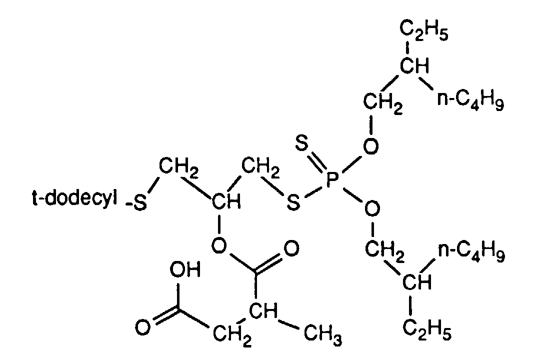 als viskose hellgelbe Flüssigkeit mit dem Brechungsindex n_{D}²⁰= 1.4914 und IR-Absorptionsmaxima bei den Wellenzahlen 1712 cm⁻¹ und 1741 cm⁻¹.

Die in Tabelle 1 aufgeführten Verbindungen werden in Analogie zu den angegebenen Beispielen durch Verwendung der entsprechenden Ausgangsverbindungen erhalten.

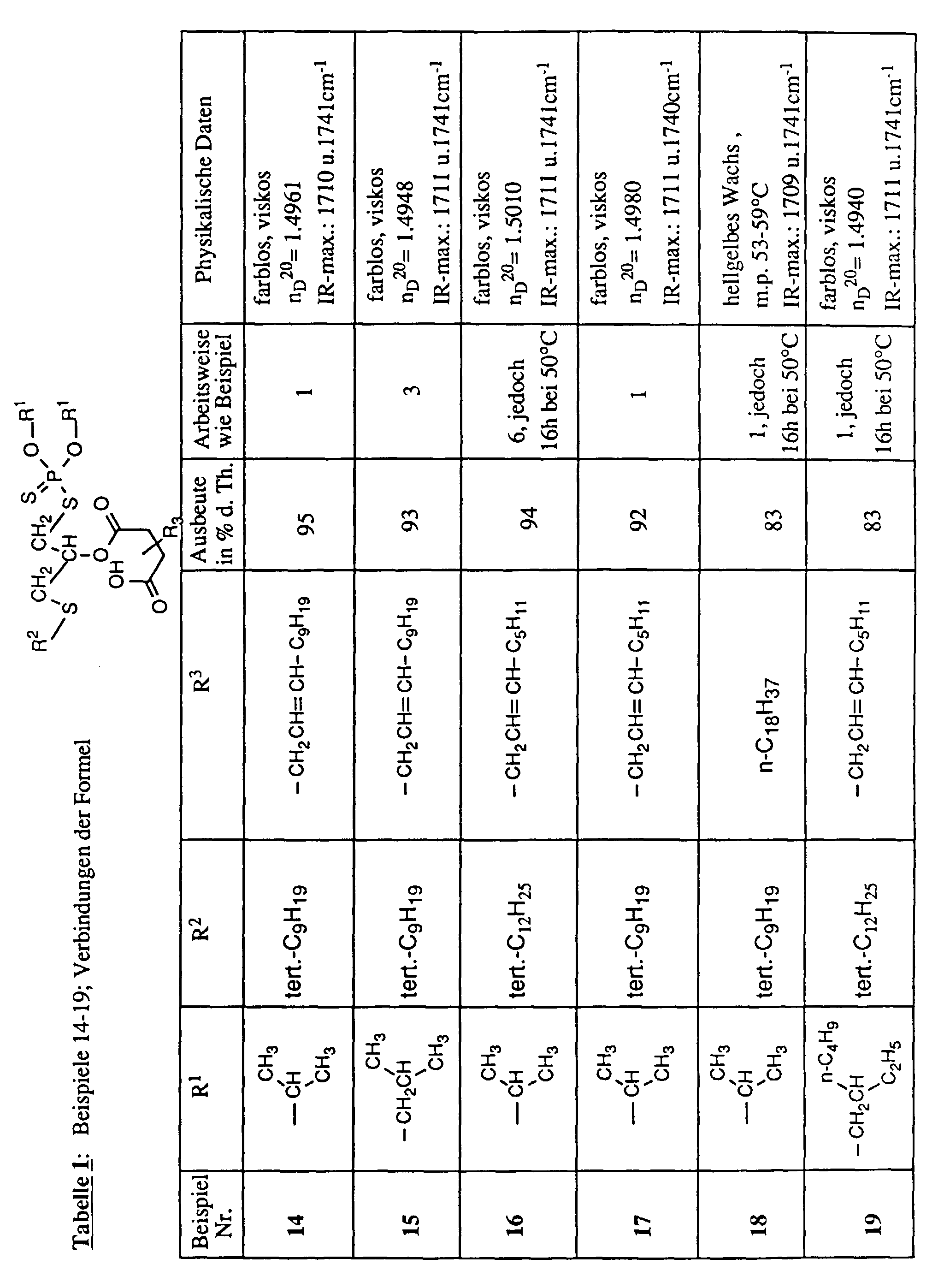

### Beispiel 20

Zu 20.9 g O,O'-Diisobutyl-dithiophosphorsäure in 20 ml Toluol werden unter Stickstoff und unter Kühlung mit einem Wasserbad tropfenweise 18.7 g tert-Nonyl-(2,3-epoxypropyl)thioether zugesetzt, wobei die Temperatur 20-25°C nicht übersteigt. Anschließend wird für 2 h auf 60°C erwärmt. Nach Zugabe von 30.4 g n-Octadecylbernsteinsäureanhydrid wird die Reaktionsmischung für 3 h auf 110°C gehalten. Danach wird abgekühlt, mit Toluol verdünnt, mit Wasser gewaschen und die organische Phase nach Trocknen über Natriumsulfat durch Anlegen von Unterdruck vom Lösungsmittel befreit. Es bleiben 63.0 g (89 % d. Th.) eines Gemisches der Verbindungen 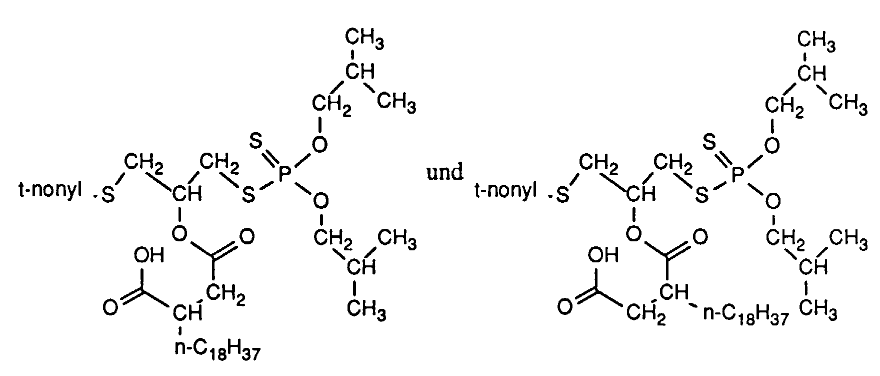 als hellgelbes langsam erstarrendes Wachs mit dem Schmelzbereich 47-56°C und IR-Absorptionsmaxima bei den Wellenzahlen 1710 cm⁻¹ und 1741 cm⁻¹ (KBr).

### Beispiel 21

80.0 g 85%ige O,O'-Di-n-dodecyldithiophosphorsäure werden analog Beispiel 1 mit 31.6 g tert-Nonyl-(2,3-epoxypropyl)thioether umgesetzt. Man erhält 88.9 g (75% d. Th.) eines Zwischenproduktes als farblose Flüssigkeit mit dem Brechungsindex n_{D}²⁰= 1.4924 der Formel

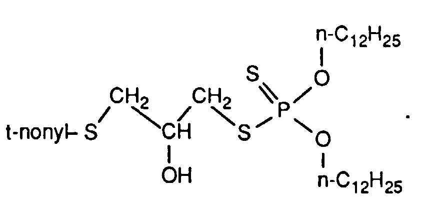

Anschließend werden zu einer Lösung von 36.0 g dieses Produktes und 9.2 g Phthalsäureanhydrid in 30 ml Dibutylether zunächst 0.1 g Dimethylaminopyridin zugegeben und dann 8.0 g Triethylamin zugetropft. Die Mischung wird für 8 h bei 70°C gerührt. Anschließend wird abgekühlt, mit zweimolarer Salzsäure angesäuert und nach Verdünnen mit Toluol die organische Phase abgetrennt. Diese wird zweimal mit 50 ml Wasser gewaschen, über Natriumsulfat getrocknet und im Vakuum eingeengt. Man erhält 41.6 g (95% d. Th.) der Verbindung 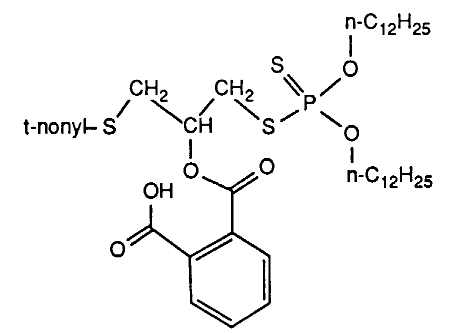 als gelbe Flüssigkeit mit dem Brechungsindex n_{D}²⁰= 1.5071 und einem IR-Absorptionsmaximum bei 1731 cm⁻¹.

Die in Tabelle 2 aufgeführten Verbindungen werden nach dem in Beispiel 21 beschriebenen Herstellungsverfahren durch Verwendung der entsprechenden Ausgangsverbindungen erhalten. Wo angegeben erfolgt die Aufarbeitung durch Flash-Chromatografie auf Kieselgel unter Verwendung eines Gradienten Dichlormethan/Aceton.

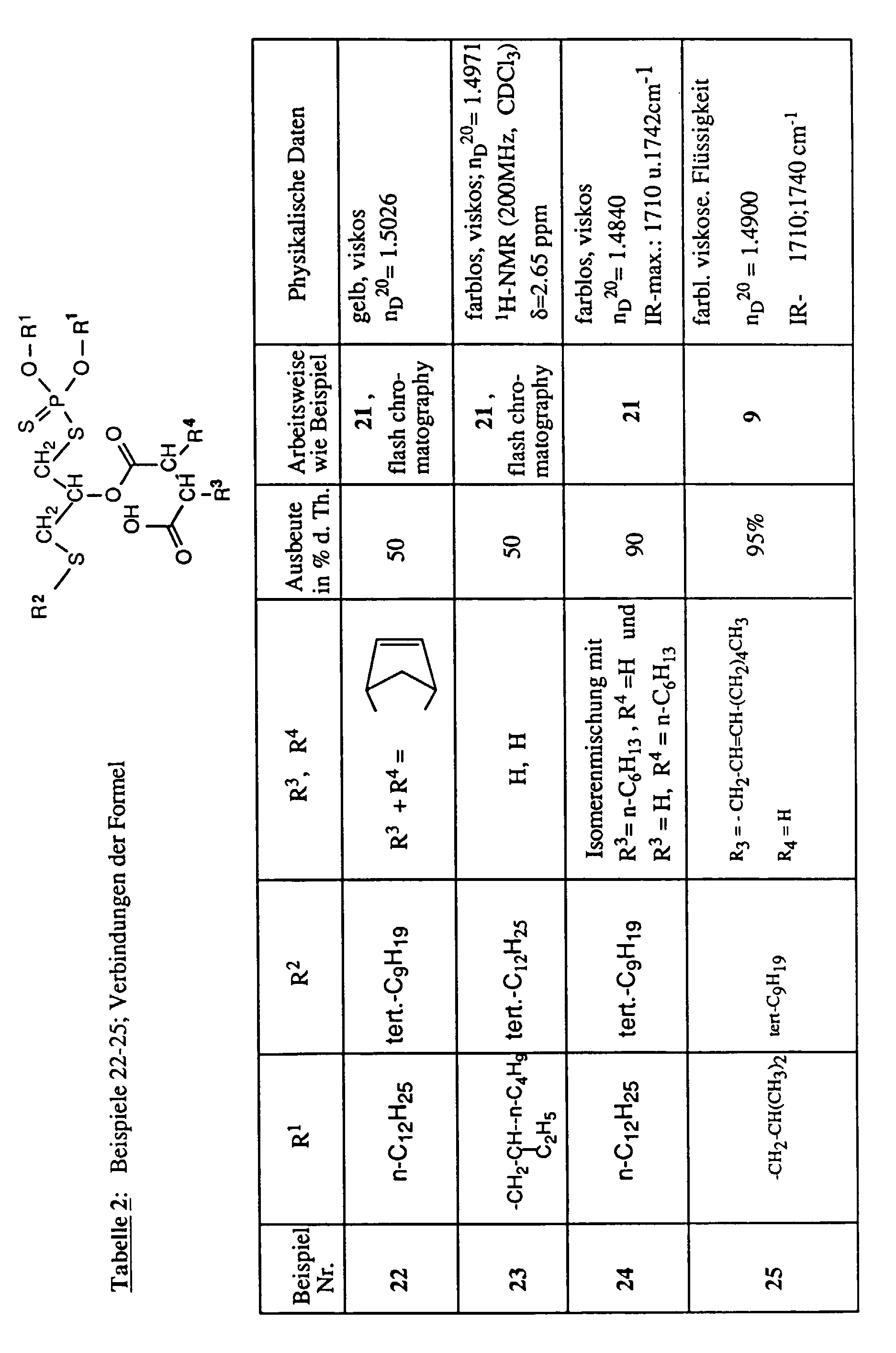

### Beispiel 26: Diisotridecylammoniumsalz der Verbindung aus Beispiel 1

Zu 15.0 g des Produktes aus Beispiel 1 in 20 ml Toluol werden 8.21 g technisches Ditridecylamin zugetropft. Nach sorgfältiger Durchmischung wird das Lösungsmittel durch Anlegen von Unterdruck abdestilliert. Es bleiben 21.7 g (93% d. Th.) eines Gemisches der isomeren Verbindungen 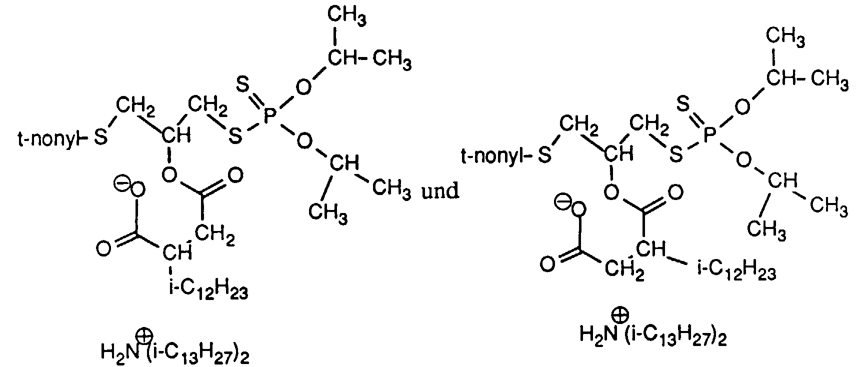 als viskose gelbe Flüssigkeit mit dem Brechungsindex n_{D}²⁰= 1.4905 zurück.

### Beispiel 27: Lithiumsalz der Verbindung aus Beispiel 3

In 100 ml Toluol werden 15.0 g des Produktes aus Beispiel 3 gelöst. Nach Zugabe von 0.90 g Lithiumhydroxid wird unter Stickstoff an einem Wasserabscheider zum Rückfluß erhitzt, bis kein Reaktionswasser mehr übergeht. Anschließend wird das Lösungsmittel bei vermindertem Druck abdestilliert. Man erhält 15.7 g des Isomerengemisches entsprechend den Formeln 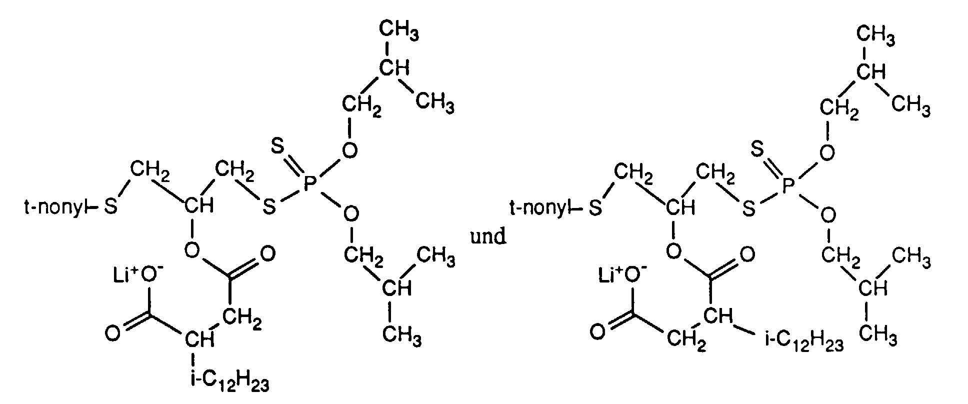 als viskose gelbe Flüssigkeit mit dem Brechungsindex n_{D}²⁰= 1.5060;

| Mikroanalyse: | C | H | S | P | Li |
|---|---|---|---|---|---|
| berechnet | 59.2% | 9.37% | 13.2% | 4.23% | 0.95% |
| gefunden | 60.5% | 9.13% | 12.2% | 4.02% | 0.93%. |

### Anwendungsbeispiele

### Beispiele 28-44: Verschleißschutz und Korrosivität gegenüber Kupfer

Zur Prüfung auf Eignung als Verschleißschutzadditiv wird die ASTM-Standardmethode D-2783-81 unter Verwendung des Shell-Vierkugelapparates (VKA) herangezogen. Als Basisöl wird ein Öl mit einer Viskosität von 26.2 mm²/s bei 40°C und 4.8 mm²/s bei 100°C sowie einem Schwefelgehalt von 0.54% verwendet. Die zu testende Verbindung aus dem jeweils genannten Beispiel wird dem Basisöl jeweils in einer Menge von 1 Gew.-% zugegeben. Ermittelt werden:
a) Die Schweißlast WL (Weld Load) als die Last (in kg), bei der die 4 Kugeln innerhalb von 10 s zusammenschweißen, und
b) der mittlere Verschleißnarbendurchmesser WSD (Wear Scar Diameter) bei einer Last von 20 kg während einer Stunde (in mm).

Die Korrosivität gegenüber Kupfer wird nach der ASTM-Standardmethode D-130 bestimmt. Dazu wird ein polierter Kupferstreifen für drei Stunden in eine auf 120°C gehaltene Probezusammensetzung getaucht. Diese besteht aus dem oben beschriebenen Basisöl mit zusätzlich 0.03% eines handelsüblichen Kupferpassivators des Typs 1-Di-(2-ethylhexyl)-aminomethyltolutriazol und, mit Ausnahme der Vergleichsprobe, jeweils 1% der erfindungsgemäßen Verbindung. Anschließend wird der Kupferstreifen aus dem Öl entfernt, gereinigt und beurteilt, wobei die ASTM Copper Strip Corrosion Standards zur Beurteilung herangezogen werden. Die Beurteilung geschieht in vier Stufen:
1 - kein Beschlag
2 - mäßiger Beschlag
3 - starker Beschlag
4 - Korrosion,
wobei innerhalb der Zahlengruppen 1 bis 4 noch auf Grund der Schattenbildung auf den Proben eine Feinunterteilung vorgenommen wird. In der qualitativen Beurteilung A bis E steht dabei die Wertung A vor B, B vor C usw.

In Tabelle 3 sind die Resultate von 1%igen Lösungen der jeweiligen erfindungsgemäßen Verbindungen in dem oben beschriebenen Basisöl wiedergegeben.

**Tabelle 3**

| Beispiel Nr. | Verbindung aus Beispiel Nr. | Verschleißschutz (VKA) | | Korrosivität ASTM D 130 |
|---|---|---|---|---|
| | | WL/kg | WSD/mm | |
| 28 | 1 | 160 | 0.35 | 2A |
| 29 | 3 | 160 | 0.39 | 1B |
| 30 | 4 | 160 | 0.37 | 1B |
| 31 | 5 | 160 | 0.39 | 1B |
| 32 | 6 | 140 | 0.38 | 2A |
| 33 | 14 | 150 | 0.32 | 2A |
| 34 | 20 | 140 | 0.28 | 1B |
| 35 | 15 | 150 | 0.30 | 1B |
| 36 | 17 | 140 | 0.34 | 1B |
| 37 | 18 | 150 | 0.29 | 1B |
| 38 | 19 | 150 | 0.31 | 1B |
| 39 | 13 | 160 | 0.35 | 1B |
| 40 | 21 | 140 | 0.40 | 1B |
| 41 | 22 | 140 | 0.37 | 1B |
| 42 | 23 | 150 | 0.35 | 1B |
| 43 | 24 | 140 | 0.38 | 1B |
| 44 | 25 | 140 | 0.40 | 1B |
| ohne Wirkstoff | | 130 | 0.82 | 3B |

### Beispiele 45-53: Rostverhütende Eigenschaften

Erfindungsgemäße Produkte werden nach der ASTM-Standardmethode D 665 B bezüglich den rostverhütenden Eigenschaften in Turbinenölen in Gegenwart von Wasser geprüft.

Das Prüfverfahren ist derart gestaltet, daß in einem Gefäß 300 ml des zu prüfenden Öles der ISO VG Klasse VG 46, enthaltend 0.25% an erfindungsgemäßer Verbindung, und 30 ml synthetisches Meerwasser gemäß ASTM D 665 B bei 60°C während 24 h gerührt werden. Eingetaucht in das zu prüfende Öl ist eine zylindrische Stahlprobe. Gemessen wird der Korrosionsgrad der Stahlproben, wobei 0 keine und 3 starke Rostbildung bedeuten. Dementsprechend geben die Ziffern 1 und 2 Korrosionsgrade zwischen diesen beiden Extremwerten an. Die Ergebnisse des Tests sind in Tabelle 4 zusammengestellt.

**Tabelle 4:**

| Resultate des ASTM-Tests D 665 B auf rostverhütende Eigenschaften | | |
|---|---|---|
| Beispiel Nr. | Verbindung aus Beispiel Nr. | Bewertung |
| 45 | 1 | 0 |
| 46 | 3 | 0 |
| 47 | 17 | 0 |
| 48 | 13 | 0 |
| 49 | 21 | 0 |
| 50 | 22 | 0 |
| 51 | 23 | 0 |
| 52 | 24 | 0 |
| 53 | 25 | 0 |
| Vergleich ohne erfindungsgemäßen Wirkstoff | | 3 |

## Patentansprüche (Patentansprüche für folgende(n) Vertragsstaat(en): BE, DE, FR, GB, IT)

1. Verbindungen der Formel (I) 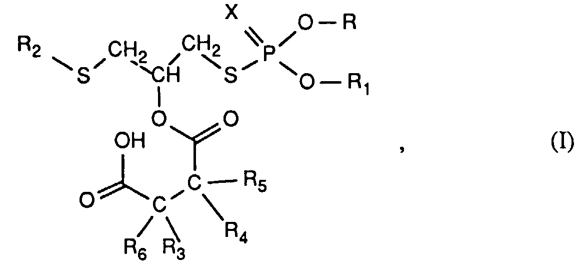 worin X Schwefel oder Sauerstoff,
R und R₁ unabhängig voneinander C₃-C₃₀Alkyl, R₂ C₄-C₁₈Alkyl,
R₃, R₄, R₅ und R₆ unabhängig voneinander H, C₁-C₂₀Alkyl, C₃-C₂₀Alkenyl, Benzyl, Phenyl oder mit C₁-C₁₂Alkyl substituiertes Phenyl bedeuten, wobei R₅ und R₆ zusammen auch die Bedeutung einer direkten Bindung haben können;
oder R₃ und R₄ zusammen Trimethylen, Tetramethylen, 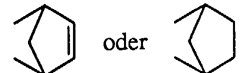 bedeuten und R₅ und R₆ die Bedeutung von H oder zusammen einer direkten Bindung haben; oder R₃ und R₆ zusammen eine Gruppe =CH₂ darstellen und R₄ und R₅ die Bedeutung H haben; oder R₄ und R₅ zusammen eine Gruppe =CH₂ darstellen und R₃ und R₆ die Bedeutung H haben;
oder R₃, R₄, R₅ und R₆ zusammen 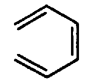 bedeuten; sowie Salze dieser Verbindungen.

2. Verbindungen gemäß Anspruch 1, worin
R und R₁ unabhängig voneinander C₃-C₁₈Akyl und R₂ C₄-C₁₈Alkyl bedeuten;
einer der Substituenten R₃ oder R₄ H, C₁-C₂₀Akyl oder C₃-C₂₀Alkenyl und der andere Wasserstoff darstellt; oder R₃ und R₄ zusammen Trimethylen, Tetramethylen, 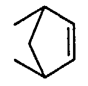 oder 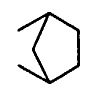 bedeuten; und R₅ und R₆ Wasserstoff oder eine direkte Bindung bedeuten; oder R₃, R₄, R₅ und R₆ zusammen 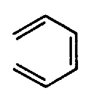 bedeuten.

3. Verbindungen gemäß Anspruch 2, worin X Schwefel bedeutet,
R und R₁ unabhängig voneinander C₃-C₁₂Alkyl; R₂ C₄-C₁₂Alkyl;
einer der Substituenten R₃ oder R₄ C₁-C₂₀Akyl oder C₄-C₂₀Alkenyl und der andere Wasserstoff darstellt; oder R₃ und R₄ zusammen Trimethylen oder Tetramethylen darstellen; und
R₅ und R₆ Wasserstoff oder eine direkte Bindung bedeuten.

4. Verbindungen gemäß Anspruch 3, worin R und R₁ jeweils gleich sind und Isopropyl oder 2-Methylpropyl bedeuten, R₂ tertiär-Nonyl oder tertiär-Dodecyl bedeutet, einer der Substituenten R₃ oder R₄ C₈-C₁₂-Alkyl oder -Alkenyl, der andere Wasserstoff darstellt und
R₅ und R₆ Wasserstoff bedeuten.

5. Verbindungen gemäß Anspruch 1, worin R und R₁ gleich sind.

6. Verbindungen gemäß Anspruch 1, worin X Schwefel bedeutet.

7. Verbindungen der Formel (I) und deren Salze gemäß Anspruch 1, worin das Salz ein Alkalimetall-, Erdalkalimetall-, Zink- oder Kupfersalz oder ein Ammonium-, mono-, di- oder tri-C₁-C₁₈alkylsubstituiertes Ammoniumsalz ist, wobei auch gemischte Salze möglich sind.

8. Verbindungen nach Anspruch 7, worin das Salz ein Alkalimetallsalz oder ein mono- oder di-C₈-C₁₈-akylsubstituiertes Ammoniumsalz ist.

9. Zusammensetzung enthaltend a) einen Schmierstoff, eine Hydraulik- oder Metallbearbeitungsflüssigkeit und b) mindestens eine Verbindung der Formel (I) gemäß Anspruch 1.

10. Zusammensetzung gemäß Anspruch 9 enthaltend 0.01 bis 5 Gewichtsprozent mindestens einer Verbindung der Formel (I).

11. Zusammensetzung gemäß Anspruch 9, worin die Komponente a) ein Schmierstoff ist.

12. Zusammensetzung gemäß Anspruch 9, die zusätzlich ein oder mehrere weitere Additive, insbesondere Korrosionsschutzmittel, Rostinhibitoren, Metall-Desaktivatoren, Viskositätsindex-Verbesserer, Dispergiermittel, Antioxidantien, Stockpunkterniedriger, Hochdruck- oder Verschleißschutzzusätze enthält.

13. Verwendung von Verbindungen der Formel (I) gemäß Anspruch (I), als Mehrzweckadditive in Schmierstoffen, Metallbearbeitungs- und Hydraulikflüssigkeiten.

14. Verfahren zur Verbesserung der Gebrauchseigenschaften von Schmierstoffen, Metallbearbeitungs- und Hydraulikflüssigkeiten, dadurch gekennzeichnet, daß diesen eine oder mehrere Verbindungen der Formel (I) gemäß Anspruch 1 zugesetzt werden.

## Patentansprüche (Patentansprüche für folgende(n) Vertragsstaat(en): ES)

1. Zusammensetzung enthaltend a) einen Schmierstoff, eine Hydraulik- oder Metallbearbeitungsflüssigkeit und b) mindestens eine Verbindung der Formel (I) oder/und deren Salz 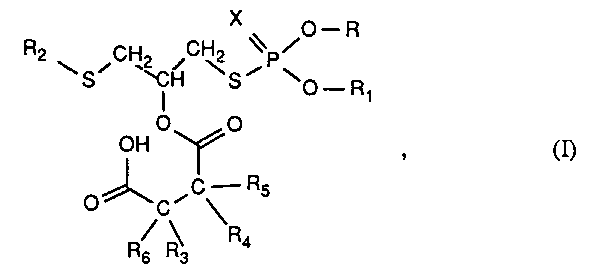 worin X Schwefel oder Sauerstoff,
R und R₁ unabhängig voneinander C₃-C₃₀Alkyl, R₂ C₄-C₁₈Alkyl,
R₃, R₄, R₅ und R₆ unabhängig voneinander H, C₁-C₂₀Alkyl, C₃-C₂₀Alkenyl, Benzyl, Phenyl oder mit C₁-C₁₂Alkyl substituiertes Phenyl bedeuten, wobei R₅ und R₆ zusammen auch die Bedeutung einer direkten Bindung haben können;
oder R₃ und R₄ zusammen Trimethylen, Tetramethylen, 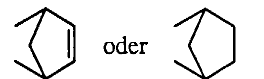 bedeuten und R₅ und R₆ die Bedeutung von H oder zusammen einer direkten Bindung haben; oder R₃ und R₆ zusammen eine Gruppe =CH₂ darstellen und R₄ und R₅ die Bedeutung H haben; oder R₄ und R₅ zusammen eine Gruppe =CH₂ darstellen und R₃ und R₆ die Bedeutung H haben;
oder R₃, R₄, R₅ und R₆ zusammen 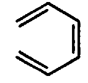 bedeuten.

2. Zusammensetzung gemäß Anspruch 1, worin
R und R₁ unabhängig voneinander C₃-C₁₈Akyl und R₂ C₄-C₁₈Alkyl bedeuten;
einer der Substituenten R₃ oder R₄ H, C₁-C₂₀Akyl oder C₃-C₂₀Alkenyl und der andere Wasserstoff darstellt; oder R₃ und R₄ zusammen Trimethylen, Tetramethylen, 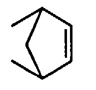 oder 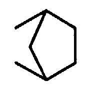 bedeuten; und R₅ und R₆ Wasserstoff oder eine direkte Bindung bedeuten;
oder R₃, R₄, R₅ und R₆ zusammen 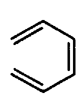 bedeuten.

3. Zusammensetzung gemäß Anspruch 2, worin X Schwefel bedeutet,
R und R₁ unabhängig voneinander C₃-C₁₂Akyl; R₂ C₄-C₁₂Alkyl;
einer der Substituenten R₃ oder R₄ C₁-C₂₀Alkyl oder C₄-C₂₀Alkenyl und der andere Wasserstoff darstellt; oder R₃ und R₄ zusammen Trimethylen oder Tetramethylen darstellen; und
R₅ und R₆ Wasserstoff oder eine direkte Bindung bedeuten.

4. Zusammensetzung gemäß Anspruch 3, worin R und R₁ jeweils gleich sind und Isopropyl oder 2-Methylpropyl bedeuten, R₂ tertiär-Nonyl oder tertiär-Dodecyl bedeutet, einer der Substituenten R₃ oder R₄ C₈-C₁₂-Alkyl oder -Akenyl, der andere Wasserstoff darstellt, und
R₅ und R₆ Wasserstoff bedeuten.

5. Zusammensetzung gemäß Anspruch 1, worin R und R₁ gleich sind.

6. Zusammensetzung gemäß Anspruch 1, worin X Schwefel bedeutet.

7. Zusammensetzung gemäß Anspruch 1, worin das Salz ein Alkalimetall-, Erdalkalimetall-, Zink- oder Kupfersalz oder ein Ammonium-, mono-, di- oder tri-C₁-C₁₈-alkylsubstituiertes Ammoniumsalz ist, wobei auch gemischte Salze möglich sind.

8. Zusammensetzung nach Anspruch 7, worin das Salz ein Alkalimetallsalz oder ein mono- oder di-C₈-C₁₈-akylsubstituiertes Ammoniumsalz ist.

9. Zusammensetzung gemäß Anspruch 1 enthaltend 0.01 bis 5 Gewichtsprozent mindestens einer Verbindung der Formel (I).

10. Zusammensetzung gemäß Anspruch 1, worin die Komponente a) ein Schmierstoff ist.

11. Zusammensetzung gemäß Anspruch 1, die zusätzlich ein oder mehrere weitere Additive, insbesondere Korrosionsschutzmittel, Rostinhibitoren, Metall-Desaktivatoren, Viskositätsindex-Verbesserer, Dispergiermittel, Antioxidantien, Stockpunkterniedriger, Viskositätsindex-Verbesserer, Dispergiermittel, Antioxidantien, Stockpunkterniedriger, Hochdruck- oder Verschleißschutzzusätze, enthält.

12. Verfahren zur Verbesserung der Gebrauchseigenschaften von Schmierstoffen, Metallbearbeitungs- und Hydraulikflüssigkeiten, dadurch gekennzeichnet, daß diesen eine oder mehrere Verbindungen der Formel (I), wie in Anspruch 1 beschrieben, zugesetzt werden.

## Claims (Claims for the following Contracting State(s): BE, DE, FR, GB, IT)

1. A compound of the formula (I) 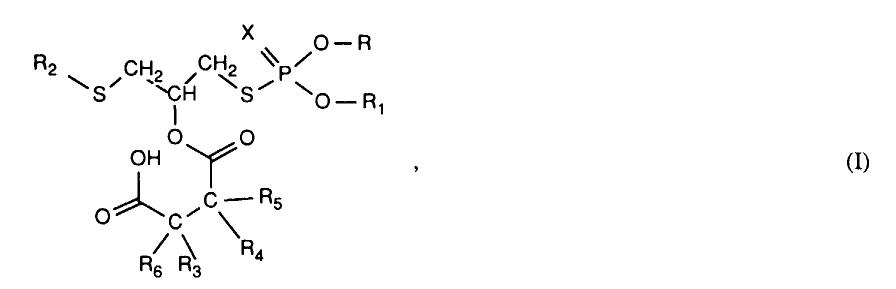 in which X is oxygen or sulfur, R and R₁ independently of one another are C₃-C₃₀alkyl, R₂ is C₄-C₁₈alkyl and R₃, R₄, R₅ and R₆ independently of one another are H, C₁-C₂₀alkyl, C₃-C₂₀alkenyl, benzyl, phenyl or phenyl which is substituted by C₁-C₁₂alkyl, and in which R₅ and R₆ together can also be a direct bond; or R₃ and R₄ together are trimethylene, tetramethylene, 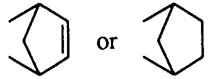 and R₅ and R₆ are a direct bond or H; or R₃ and R₆ together are a group =CH₂ and R₄ and R₅ are H; or R₄ and R₅ together are a group =CH₂ and R₃ and R₆ are H; or R₃, R₄, R₅ and R₆ together are 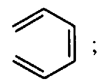 or a salt of such a compound.

2. A compound according to claim 1, in which R and R₁ independently of one another are C₃-C₁₈alkyl and R₂ is C₄-C₁₈alkyl; one of the substituents R₃ or R₄ is H, C₁-C₂₀alkyl or C₃-C₂₀alkenyl and the other is hydrogen; or R₃ and R₄ together are trimethylene, tetramethylene, 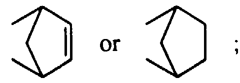 and R₅ and R₆ are hydrogen or a direct bond; or R₃, R₄, R₅ and R₆ together are

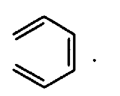

3. A compound according to claim 2, in which X is sulfur, R and R₁ independently of one another are C₃-C₁₂alkyl; R₂ is C₄-C₁₂alkyl; one of the substituents R₃ or R₄ is C₁-C₂₀alkyl or C₄-C₂₀alkenyl and the other is hydrogen; or R₃ and R₄ together are trimethylene or tetramethylene; and R₅ and R₆ are hydrogen or a direct bond.

4. A compound according to claim 3, in which R and R₁ are in each case identical and are isopropyl or 2-methylpropyl, R₂ is tert-nonyl or tert-dodecyl, one of the substituents R₃ or R₄ is C₈-C₁₂alkyl or -alkenyl and the other is hydrogen, and R₅ and R₆ are hydrogen.

5. A compound according to claim 1, in which R and R₁ are identical.

6. A compound according to claim 1, in which X is sulfur.

7. A compound of the formula (I) or a salt thereof according to claim 1, in which the salt is an alkali metal, alkaline earth metal, zinc or copper salt or an ammonium or mono-, di- or tri-C₁-C₁₈alkyl-substituted ammonium salt, a mixed salt also being possible.

8. A compound according to claim 7, in which the salt is an alkali metal salt or a mono- or di-C₈-C₁₈alkyl-substituted ammonium salt.

9. A composition comprising a) a lubricant or a hydraulic or metalworking fluid and b) at least one compound of the formula (I) according to claim 1.

10. A composition according to claim 9, comprising 0.01 to 5 per cent by weight of at least one compound of the formula (I).

11. A composition according to claim 9, in which component a) is a lubricant.

12. A composition according to claim 9, which additionally comprises one or more other additives, in particular anticorrosion agents, rust inhibitors, metal deactivators, agents for improving the viscosity index, dispersing agents, antioxidants, pour-point depressants or high-pressure or antiwear additives.

13. The use of a compound of the formula (I) according to claim 1 as a multipurpose additive in lubricants and metalworking and hydraulic fluids.

14. A process for improving the use properties of lubricants and metalworking and hydraulic fluids, which comprises adding one or more compounds of the formula (I) according to claim 1 to these.

## Claims (Claims for the following Contracting State(s): ES)

1. A composition comprising a) a lubricant or a hydraulic or metalworking fluid and b) at least one compound of the formula (I) or/and a salt thereof 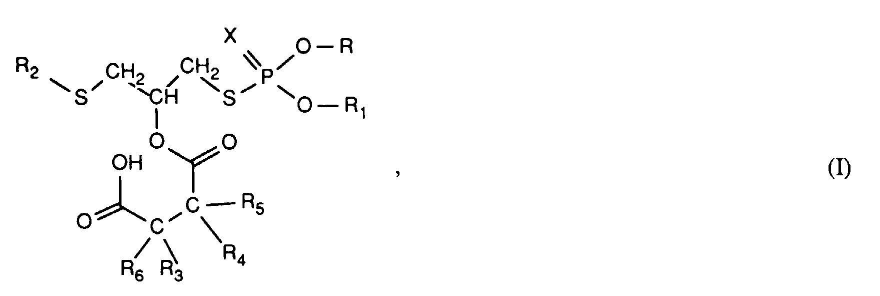 in which X is oxygen or sulfur, R and R₁ independently of one another are C₃-C₃₀alkyl, R₂ is C₄-C₁₈alkyl and R₃, R₄, R₅ and R₆ independently of one another are H, C₁-C₂₀alkyl, C₃-C₂₀alkenyl, benzyl, phenyl or phenyl which is substituted by C₁-C₁₂alkyl, and in which R₅ and R₆ together can also be a direct bond; or R₃ and R₄ together are trimethylene, tetramethylene, 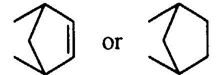 and R₅ and R₆ are a direct bond or H; or R₃ and R₆ together are a group =CH₂ and R₄ and R₅ are H; or R₄ and R₅ together are a group =CH₂ and R₃ and R₆ are H; or R₃, R₄, R₅ and R₆ together are

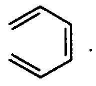

2. A composition according to claim 1, in which R and R₁ independently of one another are C₃-C₁₈alkyl and R₂ is C₄-C₁₈alkyl; one of the substituents R₃ or R₄ is H, C₁-C₂₀alkyl or C₃-C₂₀alkenyl and the other is hydrogen; or R₃ and R₄ together are trimethylene, tetramethylene, 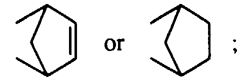 and R₅ and R₆ are hydrogen or a direct bond; or R₃, R₄, R₅ and R₆ together are

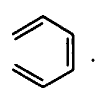

3. A composition according to claim 2, in which X is sulfur, R and R₁ independently of one another are C₃-C₁₂alkyl; R₂ is C₄-C₁₂alkyl; one of the substituents R₃ or R₄ is C₁-C₂₀alkyl or C₄-C₂₀alkenyl and the other is hydrogen; or R₃ and R₄ together are trimethylene or tetramethylene; and R₅ and R₆ are hydrogen or a direct bond.

4. A composition according to claim 3, in which R and R₁ are in each case identical and are isopropyl or 2-methylpropyl, R₂ is tert-nonyl or tert-dodecyl, one of the substituents R₃ or R₄ is C₈-C₁₂alkyl or -alkenyl and the other is hydrogen, and R₅ and R₆ are hydrogen.

5. A composition according to claim 1, in which R and R₁ are identical.

6. A composition according to claim 1, in which X is sulfur.

7. A composition according to claim 1, in which the salt is an alkali metal, alkaline earth metal, zinc or copper salt or an ammonium or mono-, di- or tri-C₁-C₁₈alkyl-substituted ammonium salt, a mixed salt also being possible.

8. A composition according to claim 7, in which the salt is an alkali metal salt or a mono- or di-C₈-C₁₈alkyl-substituted ammonium salt.

9. A composition according to claim 1, comprising 0.01 to 5 per cent by weight of at least one compound of the formula (I).

10. A composition according to claim 1, in which component a) is a lubricant.

11. A composition according to claim 1, which additionally comprises one or more other additives, in particular anticorrosion agents, rust inhibitors, metal deactivators, agents for improving the viscosity index, dispersing agents, antioxidants, pour-point depressants or high pressure or antiwear additives.

12. A process for improving the use properties of lubricants and metalworking and hydraulic fluids, which comprises adding one or more compounds of the formula (I), as described in claim 1, to these.

## Revendications (Revendications pour l'(les) Etat(s) contractant(s) suivant(s): BE, DE, FR, GB, IT)

1. Composés de formule (I) 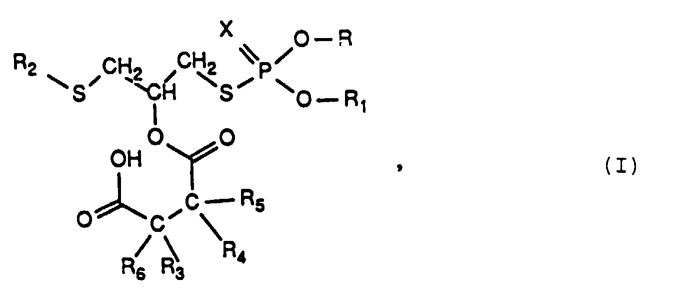 dans laquelle
X représente le soufre ou l'oxygène,
R et R₁, indépendamment l'un de l'autre, représentent un groupe alkyle en C₃-C₃₀,
R₂ représente un groupe alkyle en C₄-C₁₈,
R₃, R4, R₅ et R₆, indépendamment les uns des autres, représentent un atome d'hydrogène, des groupes alkyle en C₁-C₂₀, alcényle en C₃-C₂₀, benzyle, phényle ou phényle substitué par alkyle en C₁-C₁₂, R₅ et R₆ ensemble, peuvent avoir aussi la signification d'une liaison directe ;
ou R₃ et R₄ ensemble représentent triméthylène, tétraméthylène, 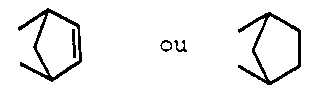 et R₅ et R₆ représentent un atome d'hydrogène ou ensemble une liaison directe ; ou R₃ et R₆ ensemble représentent un groupe =CH₂ et R₄ et R₅ représentent H ; ou R₄ et R₅ ensemble représentent un groupe =CH₂ et R₃ et R₆ représentent un atome d'hydrogène ;
ou R₃, R₄, R₅ et R₆, ensemble représentent 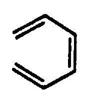 ainsi que des sels de ces composés.

2. Composés selon la revendication 1, dans lesquels
R et R1, indépendamment l'un de l'autre, représentent des groupes alkyle en C₃-C₁₈, et R₂ alkyle en C₄-C₁₈, ;
un des substituants R₃ ou R₄ représente un atome d'hydrogène, des groupes alkyle en C₁-C₂₀ ou alcényle en C₃-C₂₀ et l'autre représente un atome d'hydrogène ; ou
R3 et R₄ ensemble représentent triméthylène, tétraméthylène, 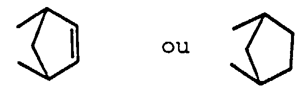 et R₅ et R₆ représentent un atome d'hydrogène ou une liaison directe ; ou R₃, R₄, R₅ et R₆ ensemble représentent

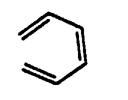

3. Composés selon la revendication 2, dans lesquels X représente un atome de soufre,
R et R₁, indépendamment l'un de l'autre, représentent un groupe alkyle en C₃-C₁₂ ; R₂ représente un groupe alkyle en C₄-C₁₂ ;
un des substituants R3 ou R₄ représente des groupes alkyle en C₁-C₂₀ ou alcényle en C₄-C₂₀ et l'autre représente un atome d'hydrogène ; ou R₃ et R₄ ensemble représentent triméthylène ou tétraméthylène ; et
R₅ et R₆ représentent un atome d'hydrogène ou une liaison directe.

4. Composés selon la revendication 3, dans lesquels R et R₁ chacun sont identiques et représentent isopropyle ou 2-méthylpropyle, R₂ représente tert-nonyle ou tert-dodécyle, un des substituants R₃ ou R₄ représente des groupes alkyle en C₈-C₁₂ ou alcényle en C₈-C₁₂, l'autre représente un atome d'hydrogène et
R₅ et R₆ représentent un atome d'hydrogène.

5. Composés selon la revendication 1, dans lesquels R et R₁ sont identiques.

6. Composés selon la revendication 1, dans lesquels X représente le soufre.

7. Composés de formule (I) et leurs sels selon la revendication 1, dans lesquels le sel est un sel de métaux alcalins, alcalino-terreux, de zinc ou de cuivre ou un sel d'ammonium, d'ammonium mono-, di- ou tri-substitué par alkyle en C₁-C₁₈, des sels mixtes sont également possibles.

8. Composés selon la revendication 7, dans lesquels le sel est un sel de métaux alcalins ou un sel d'ammonium mono- ou di-substitué par alkyle en C₈-C₁₈.

9. Composition contenant a) un lubrifiant, un fluide hydraulique et un fluide de travail de métaux et b) au moins un composé de formule (I) selon la revendication 1.

10. Composition selon la revendication 9, contenant de 0,01 à 5 % en poids d'au moins un composé de formule (I).

11. Composition selon la revendication 9, dans laquelle le composant a) est un lubrifiant.

12. Composition selon la revendication 9, qui contient de plus un ou plusieurs autres additifs, en particulier des agents anti-corrosion, des inhibiteurs de rouille, des désactivateurs de métaux, des agent améliorant l'indice de viscosité, des agents dispersants, des antioxydants, des agents d'abaissement du point de figeage, des additifs haute pression et anti-usure.

13. Utilisation de composés de formule (I) selon la revendication 1, en tant qu'additfs multifonctionnels dans des lubrifiants, des fluides hydrauliques et des fluides de travail de métaux.

14. Procédé pour améliorer les propriétés d'utilisation des lubrifiants, des fluides hydrauliques et des fluides de travail de métaux, caractérisé en ce qu'on leur ajoute un ou plusieurs composés de formule (I) selon la revendication 1.

## Revendications (Revendications pour l'(les) Etat(s) contractant(s) suivant(s): ES)

1. Composition contenant a) un lubrifiant, un fluide hydraulique ou un fluide de travail de métaux et b) au moins un composé de formule (I) et/ou un sel de celui-ci 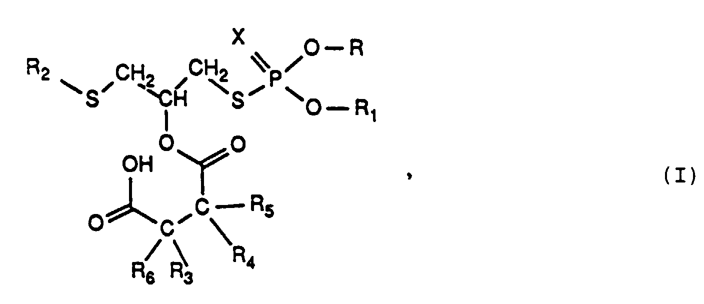 dans laquelle
X représente le soufre ou l'oxygène,
R et R₁, indépendamment l'un de l'autre, représentent un groupe alkyle en C₃-C₃₀,
R₂ représente un groupe alkyle en C₄-C₁₈,
R₃, R₄, R₅ et R₆, indépendamment les uns des autres, représentent un atome d'hydrogène, des groupes alkyle en C₁-C₂₀, alcényle en C₃-C₂₀, benzyle, phényle ou phényle substitué par alkyle en C₁-C₁₂, R₅ et R₆ ensemble peuvent avoir aussi la signification d'une liaison directe ;
ou R₃ et R₄ ensemble représentent triméthylène, tétraméthylène, 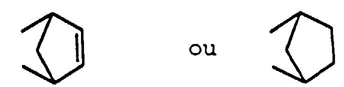 et R₅ et R₆ représentent un atome d'hydrogène ou ensemble une liaison directe ; ou R₃ et R₆ ensemble représentent un groupe =CH₂ et R₄ et R₅ représentent H ; ou R₄ et R₅ ensemble représentent un groupe =CH₂ et R₃ et R₆ représentent un atome d'hydrogène ;
ou R₃ , R₄, R₅ et R₆, ensemble représentent

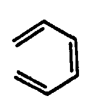

2. Composition selon la revendication 1, dans laquelle
R et R₁, indépendamment l'un de l'autre, représentent des groupes alkyle en C₃-C₁₈ et R₂ alkyle en C₄-C₁₈, ;
un des substituants R₃ ou R₄ représente un atome d'hydrogène, des groupes alkyle en C₁-C₂₀ ou alcényle en C₃-C₂₀ et l'autre représente un atome d'hydrogène ; ou
R₃ et R₄ ensemble représentent triméthylène, tétraméthylène, 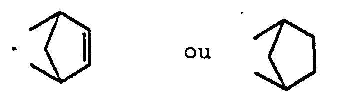 et R₅ et R₆ représentent un atome d'hydrogène ou une liaison directe ; ou R₃, R₄, R₅ et R₆ ensemble représentent

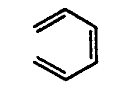

3. Composition selon la revendication 2, dans laquelle X représente un atome de soufre,
R et R₁, indépendamment l'un de l'autre, représentent un groupe alkyle en C₃-C₁₂ ; R₂ représente un groupe alkyle en C₄-C₁₂ ;
un des substituants R3 ou R₄ représente des groupes alkyle en C₁-C₂₀ ou alcényle en C₄-C₂₀ et l'autre représente un atome d'hydrogène ; ou R₃ et R₄ ensemble représentent triméthylène ou tétraméthylène ; et
R₅ et R₆ représentent un atome d'hydrogène ou une liaison directe.

4. Composition selon la revendication 3, dans laquelle R et R₁ chacun sont identiques et représentent isopropyle ou 2-méthylpropyle, R₂ représente tert-nonyle ou tert-dodécyle, un des substituants R₃ ou R₄ représente des groupes alkyle en C₈-C₁₂ ou alcényle en C₈-C₁₂, l'autre représente un atome d'hydrogène et
R₅ et R₆ représentent un atome d'hydrogène.

5. Composition selon la revendication 1, dans laquelle R et R₁ sont identiques.

6. Composition selon la revendication 1, dans laquelle X représente le soufre.

7. Composition selon la revendication 1, dans laquelle le sel est un sel de métaux alcalins, alcalino-terreux, de zinc ou de cuivre ou un sel d'ammonium, d'ammonium mono-, di- ou tri-substitué par alkyle en C₁-C₁₈ des sels mixtes sont également possibles.

8. Composition selon la revendication 7, dans laquelle le sel est un sel de métaux alcalins ou un sel d'ammonium mono- ou di-substitué par alkyle en C₈-C₁₈.

9. Composition selon la revendication 1, contenant de 0,01 à 5 % en poids d'au moins un composé de formule (I).

10. Composition selon la revendication 1, dans laquelle le composant a) est un lubrifiant.

11. Composition selon la revendication 1, qui contient de plus un ou plusieurs autres additifs, en particulier des agents anti-corrosion, des inhibiteurs de rouille, des désactivateurs de métaux, des agent améliorant l'indice de viscosité, des agents dispersants, des antioxydants, des agents d'abaissement du point de figeage, des additifs haute pression et anti-usure.

12. Procédé pour améliorer les propriétés d'utilisation des lubrifiants, des fluides hydrauliques et des fluides de travail de métaux, caractérisé en ce qu'on leur ajoute un ou plusieurs composés de formule (I) comme décrit dans la revendication 1.
